# EUROPEAN PATENT APPLICATION

(11) **EP 4 730 201 A1**
(43) Date of publication of application: **22.04.2026**
(21) Application number: 25209337.2
(22) Date of filing: 17.10.2025
(51) Int. Cl.: G06N 3/045, G06N 3/08

(54) **MULTI-AGENT PROCESS SIMULATIONS**

(30) Priority: 21.10.2024 US 202418921546
(71) Applicant: SAP SE, 69190 Walldorf (DE)
(72) Inventor: GERBER, Andreas, 69190 Walldorf (DE)
(74) Representative: Müller-Boré & Partner Patentanwälte PartG mbB

(57) **Abstract**

Systems and methods described herein provide a computer-implemented approach for process simulations using multi-agent systems. Software agents are trained using historical process data associated with a process. Each software agent represents a single task in the process. Based on a candidate process model, the process is simulated to generate simulation results by executing a multi-agent system. The software agents operate autonomously within the multi-agent system based on trained behavior. The process is also executed using a runtime configuration that is based on the candidate process model. The execution of the process generates runtime results for comparison with the simulation results. In some examples, the candidate process model is adjusted based on the comparison, and the simulation and the execution of the process are repeated using an adjusted multi-agent system and an adjusted runtime configuration, respectively. A deployment process model is generated based on the adjusted candidate process model.

## Description

### TECHNICAL FIELD

The subject matter disclosed herein relates, generally, to computer-implemented methods and systems for simulating process behavior. More specifically, subject matter in the present disclosure relates to multi-agent systems for process simulations.

### BACKGROUND

Process simulation generally involves the use of computational models to replicate behavior of processes. Process simulation can help predict the impact of changes to processes, estimate future performance of a process, identify bottlenecks, and improve resource allocation. Applications of business process simulation range, for example, from manufacturing and logistics to healthcare and finance, where understanding and improving process flows can benefit efficiency and cost-effectiveness.

Simulation systems often require extensive manual configuration, which can be complex and time-consuming. For example, the technical complexity of modeling an entire business process that involves multiple roles and tasks can make it difficult to understand and account for all relevant aspects of the real world, or to manage dependencies and interactions within a process. As a result, the eventual simulation of such a process may exhibit poor technical performance, wasting computing resources and leading to limited improvements, if any.

### BRIEF DESCRIPTION OF THE DRAWINGS

Some examples are shown for purposes of illustration and not limitation in the figures of the accompanying drawings. In the drawings, which are not necessarily drawn to scale, like numerals may describe similar components in different views or examples. To identify the discussion of any particular element or act more easily, the most significant digit or digits in a reference number refer to the figure number in which that element is first introduced.
FIG. 1 is a diagrammatic representation of a network environment that includes a process modeling system, a process automation system, and a multi-agent simulation system, according to some examples.
FIG. 2 is a block diagram of components of a multi-agent simulation system, according to some examples.
FIG. 3 is a flowchart illustrating tasks of a process, according to some examples.
FIG. 4 is a diagrammatic representation of the mapping tasks of a process to agents in a multi-agent system, according to some examples.
FIG. 5 is a flowchart illustrating operations of a method for using a multi-agent system to simulate a process, according to some examples.
FIG. 6 is a flowchart illustrating operations of a training phase of a method that utilizes a multi-agent system for simulation, according to some examples.
FIG. 7 is a flowchart illustrating operations of a simulation phase and an execution phase of the method of FIG. 6, according to some examples.
FIG. 8 diagrammatically illustrates training and use of a machine learning program, according to some examples.
FIG. 9 is a block diagram showing a software architecture for a computing device, according to some examples.
FIG. 10 is a block diagram of a machine in the form of a computer system, according to some examples, within which instructions may be executed for causing the machine to perform any one or more of the methodologies discussed herein.

### DETAILED DESCRIPTION

Systems and methods described herein relate to techniques for simulating a process by using a software agent to represent each task in the process. Thus, the entirety of a process can be represented by multiple software agents, where each software agent represents one individual task or step of the process. In some examples, software agents provide building blocks for configuring a simulation of a process. The software agents can be combined to represent a process model, and can be individually adjusted or reconfigured, thereby providing flexibility for process simulations.

A "software agent," or simply "agent," as used herein, refers to a program or model that is designed or configured to execute or represent a single, specific task. A "multi-agent system," as used herein, refers to a computer-implemented system of multiple interacting software agents, where each software agent represents a single, specific task. For example, in a purchase order handling process, a first software agent might be configured to generate a purchase order, while a second software agent is configured to obtain missing data needed to generate the purchase order, a third software agent is configured to transmit a generated purchase order via email, and a fourth software agent is configured to take an email attachment including the generated purchase order and store it in a cloud storage location. It is noted that multiple instances of the same agent can be included in a multi-agent system. Further, multiple software agents can be combined to represent the role of, for example, a human worker.

A multi-agent system may include hundreds or thousands of software agents. While a multi-agent system is running, the software agents operate autonomously to perform their tasks and do not require interaction from a user to be invoked. As the software agents interact and exchange data, the multi-agent system provides information similar to steps and transitions in a workflow. As such, a data flow in a multi-agent system can be modeled based on, or to provide, a workflow. In some examples, the workflow is a given workflow obtained from process mining operations.

In the context of the present disclosure, a multi-agent system differs from certain other autonomous agent systems. Specifically, while other autonomous agent systems may also include multiple agents, there is no one-to-one mapping between each agent and a respective task. Instead, each agent in such other autonomous agent systems is typically a relatively complex program that can perform multiple tasks or functions. In contrast to a multi-agent system, an agent in such other autonomous agent systems can perform various different tasks, often in parallel (e.g., to mimic a human worker). For example, the agent is configured to handle various aspects of the purchase order handling process. Thus, the same agent performs purchase order generation, transmission, and storing, and also obtains any missing data needed to generate the purchase orders.

An example method involving multi-agent simulation is performed by a computer system comprising memory and at least one hardware processor. The method includes training or configuring a plurality of software agents based on historical process data, such as event log data associated with a process to be simulated. The process can, for example, be a real-world business process, in which case the historical process data includes real-world data describing how the process is executed.

The software agents are trained or configured such that each software agent represents a single task in the process. Behavior of a software agent may be defined by various parameters. In some examples, the behavior includes one or more actions, decisions, or responses that a software agent exhibits based on its training or configuration. The behavior can be encoded in internal logic of the agent. A software agent can comprise or be implemented by, for example, a machine learning model, a script, an algorithm, or a rules-based or heuristic program. Parameters of an agent can control the agent's input and output characteristics, such as task completion time, resource requirements, and decision-making logic or process. When simulating a process using a multi-agent system, the collective behavior of the agents determines how the simulated process unfolds, allowing for accurate representation of complex processes and easy adjustment of individual aspects of a process.

The method may include simulating the process to generate simulation results by executing a multi-agent system in which the plurality of software agents are configured according to a certain process model (e.g., a candidate process model as described herein) for the process. In some examples, the simulation results are compared to baseline results from a baseline simulation (e.g., an "as-is" simulation that simulates a process in its current form). This allows for automatic comparison between, for instance, a candidate process model of a test simulation and a fixed process model of the baseline simulation (the latter representing a current or historical version of the process).

Furthermore, in some examples, the simulation results are compared to runtime results from a real-world execution of the process. For example, a runtime configuration is generated based on the process model that is currently being simulated. The process is executed using the runtime configuration to generate the runtime results for comparison with the simulation results. In this way, a candidate process model can not only be compared against a baseline process model after simulation, but also against a real-world version of the candidate process model.

In some examples, the process model is adjusted (e.g., iteratively adjusted) based on the comparison between the simulation results and the runtime results. Accordingly, both the simulating and the executing of the process can be repeated using an adjusted multi-agent system and an adjusted runtime configuration, respectively, corresponding to the adjusted process model.

The method may include automatically triggering adjustment of the process model that is being tested based on the comparison between the simulation results and the runtime results. For example, the process model is adjusted if the simulation results are not sufficiently close to the runtime results (e.g., based on one or more predetermined performance indicators that are being measured for the process). In some examples, the method includes automatically triggering retraining of at least a subset of the plurality of software agents if the simulation results are not sufficiently close to the runtime results.

The simulating of the process, and in some examples also the execution of the process, may be automatically repeated after the retraining. In some examples, adjustment of the process model also causes adjustment of the multi-agent system (e.g., the simulation setup) and the runtime configuration, thus enabling a system to generate further simulation results and further runtime results for an adjusted version of the process model.

The method may include automatically repeating the simulating and the executing of the process until detecting that the simulation results meet at least one predetermined condition with respect to the runtime results. The method may further include generating a deployment process model for the process based on the adjusted process model. For example, the deployment process model is generated once a system detects that the runtime results and the simulation results are sufficiently similar (e.g., based on one or more predetermined performance indicators that are being measured for the process). The deployment process model can include a blueprint for deploying the process.

A "process model," as used herein, may include a structured representation of a process that defines one or more of tasks, a task sequence, steps, decision points, or flows within the process. Process models can serve as blueprints for how work should be performed and can be used for analysis, optimization, or simulation purposes. In some examples, process models may be created using standardized notations such as Business Process Model and Notation (BPMN) or represented as directed graphs. Process models may include information about the tasks involved, their relationships, decision logic, or resource requirements.

In the context of multi-agent system simulations, a process model may provide a framework for configuring and orchestrating software agents to simulate a real-world process. In some examples, a multi-agent system is modeled conceptually similarly to a BPMN workflow, with transitions in the BPMN context corresponding to communication flows between agents, and with each activity, task, or step in the BPMN context being represented by an agent in the multi-agent system.

For instance, a process model for customer onboarding might include tasks such as "collect customer information," "perform credit check," and "approve account," allowing the multi-agent system to be set up so as to include appropriate software agents corresponding to these individual tasks. In some examples, a process model associated with a multi-agent system does not include strict or explicit transitions. Instead, each agent is trained or configured to know which inputs to take and which outputs to generate. During the simulation, the process can then be allowed to unfold, essentially allowing for transitions, sequences, flows, or interconnections to be uncovered or improved via the simulation.

In some examples, the process is an automated process that is executed using bots, such as Robotic Process Automation (RPA) bots. In such cases, the runtime configuration can be generated by configuring RPA bots for the executing of the process, with the RPA bots corresponding to or mirroring respective software agents of the plurality of software agents in the multi-agent system. A system may automatically configure the RPA bots so as to define the runtime configuration. The RPA bots may automatically execute the process to generate the runtime results. An RPA bot setup can be used to connect to a real system, with the bots being steered based on, for example, a script.

In some examples, the agents in the multi-agent system communicate with each other using a predetermined communication protocol or interface. For example, a blackboard system can be integrated into the multi-agent system for storing and updating process data. The multi-agent system may include an internal messaging system to deliver outputs from one agent to another. In some examples, such as when multiple instances of an agent are created, the multi-agent system implements a task-handling protocol such as Contract Net Protocol (CNP).

Other simulation approaches may tend to focus on transitions rather than states, which can complicate the modeling process. Users typically need a comprehensive understanding of the entire use case and its internal dependencies to accurately model desired behavior. Extracting relevant information from event logs to understand transitions can be technically challenging. Subject matter described in the present disclosure focuses on modeling individual states (e.g., tasks) rather than transitions, with each task represented by a dedicated software agent. This approach simplifies the modeling process by breaking down complex processes into discrete, manageable units, allowing for more granular representation and easier maintenance of a simulation model.

Additionally, other simulation approaches typically suggest using a single agent for multiple tasks or even an entire process, which makes such agents technically complex to construct or adjust. As the complexity of a process increases, these issues may be exacerbated. Technical solutions in the present disclosure simplify modeling and maintenance of large-scale simulations through the use of software agents as described herein, allowing for more manageable and adaptable simulations.

A further technical challenge in other simulation approaches is a lack of granularity. For example, by configuring a single agent to perform multiple tasks, the individual tasks of the process can be oversimplified, leading to a loss of relevant details. This in turn results in a loss of accuracy when the process is simulated. Examples described herein allow for simple, yet granular representation of processes by using a one-to-one mapping between agents and tasks. A system of the present disclosure can automatically train or configure each agent for its specific task based on event log data, ensuring that the simulation captures nuances of real-world processes. Examples described herein further facilitating the handling of dynamic changes and unexpected events.

Examples in the present disclosure provide practical applications that improve the functioning of a computing system. The computing system is improved, for example, by enabling the computing system to generate more accurate simulations of business processes, by improving its ability to configure and dynamically adjust simulation setups, and by facilitating the comparison of simulation results with runtime results. In some examples, the computing system is configured to implement an iterative process of simulation, execution, and adjustment that allows for dynamic optimization of business processes (e.g., through predictive monitoring, where historic system behavior is simulated into the future and measured while adjusting agent behavior rules).

In some examples, the computing system utilizes machine learning techniques to train and execute software agents. Machine learning and time series analysis can be used to learn repeating or periodic behavior and event patterns in usage data, increasing the accuracy of predictions and making the model easier to maintain. In some examples, the training of software agents of a multi-agent system is more computationally efficient than the training of large, multi-functional agents (e.g., by using thousands of data points to fine-tune an agent for a specific task instead of using millions of data points to generate a multi-functional agent).

The computing system can also automatically introduce errors and test process robustness to enhance the reliability and resilience of simulated business processes. For example, a multi-agent system enables the initiation of dynamic event and disruption factors, allowing the simulation to react and reach a new equilibrium. This helps in understanding a process and identifying sensitive parts in the process.

It is noted that various methods described herein cannot be performed by humans due to the scale and complexity of the computations and simulations involved. For example, a simulation can involve hundreds or thousands of software agents that are executing using processing hardware. The software agents may process data and interact to rapidly produce simulation results by iterating through a large number of simulation cycles. Further, executing a process can involve automated components such as RPA bots. Moreover, the integration of machine learning techniques for training and adjusting agents based on historical and real-time data relies on sophisticated algorithms and data processing capabilities that are inherently computational.

When the effects in this disclosure are considered in aggregate, one or more of the methodologies described herein may obviate a need for certain efforts or resources that otherwise would be involved in process simulations. For example, computing resources utilized by systems, databases, or networks may be more efficiently utilized or reduced, as a result of: more accurate simulations, adaptive optimization, a reduction in the amount of computing resources needed to train or configure software agents due to more targeted training or configuration approaches, a reduction in the amount of computing resources needed to generate or map a process model, or the use of modular software agent components across various simulations. Examples of such computing resources may include processor cycles, network traffic, memory usage, graphics processing unit (GPU) resources, data storage capacity, power consumption, or cooling capacity.

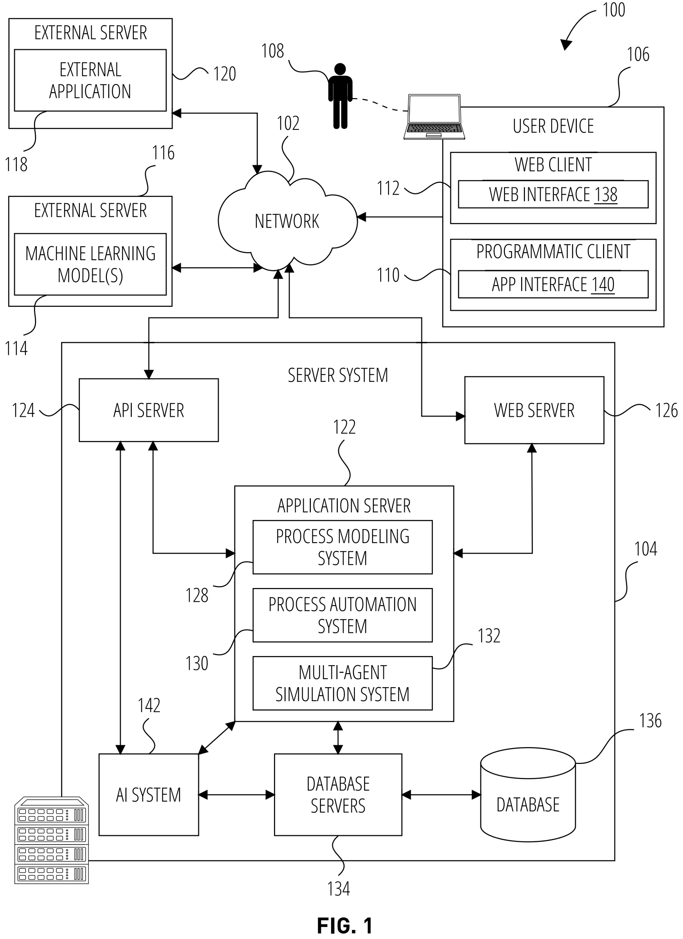

FIG. 1 is a diagrammatic representation of a networked computing environment 100 in which some examples of the present disclosure may be implemented or deployed. One or more servers in a server system 104 provide server-side functionality via a network 102 to a networked device, in the example form of a user device 106 that is accessed by a user 108. A web client 112 (e.g., a browser) or a programmatic client 110 (e.g., an "app") may be hosted and executed on the user device 106.

An Application Program Interface (API) server 124 and a web server 126 provide respective programmatic and web interfaces to components of the server system 104. A specific application server 122 hosts a process modeling system 128, process automation system 130, and a multi-agent simulation system 132, each of which includes components, modules, or applications. It is noted that, in other examples, the process modeling system 128, the process automation system 130, and the multi-agent simulation system 132 can be hosted across multiple servers.

The user device 106 can communicate with the application server 122, for example, via the web interface supported by the web server 126 or via the programmatic interface provided by the API server 124. It will be appreciated that, although only a single user device 106 is shown in FIG. 1, a plurality of user devices may be communicatively coupled to the server system 104 in some examples. Further, while certain functions may be described herein as being performed at either the user device 106 (e.g., web client 112 or programmatic client 110) or the server system 104, the location of certain functionality either within the user device 106 or the server system 104 may be a design choice.

The application server 122 is communicatively coupled to database servers 134, facilitating access to one or more information storage repositories, such as a database 136. In some examples, the database 136 includes storage devices that store information to be processed by the process modeling system 128, the process automation system 130, or the multi-agent simulation system 132.

The application server 122 accesses application data (e.g., application data stored by the database servers 134) to provide one or more applications or software tools to the user device 106 via a web interface 138 or an app interface 140. The process modeling system 128, the process automation system 130, and the multi-agent simulation system 132 can provide such one or more applications or software tools.

The process modeling system 128 can be accessed by the user 108 for the creation and management of process models. For instance, the user 108 can use the process modeling system 128 to facilitate the modeling of various business processes. The process modeling system 128 can receive input to define process steps, workflows, and relationships between different activities within a process. The process modeling system 128 may utilize various modeling notations, such as BPMN, to represent processes graphically.

In some examples, the process modeling system 128 integrates with the process automation system 130 to allow for the full or partial automation of processes represented by process models. In some examples, the process modeling system 128 integrates with the multi-agent simulation system 132 to facilitate simulation of processes based on, or related to, data of the process modeling system 128.

The process modeling system 128 may offer process mining capabilities, enabling organizations to connect their data to process management and transform static process models into dynamic dashboards. Other features of the process modeling system 128 can include insights into customer journeys, automating workflows, managing tasks, and ensuring compliance with business process standards. It is noted that the process modeling system 128 can provide a suitable user interface (e.g., via the web interface 138) to enable the user 108 to utilize its features.

The process automation system 130 is responsible for executing and managing automated processes. The automated processes can be based on models generated by the process modeling system 128 or simulations configured by the multi-agent simulation system 132. In some examples, the process automation system 130 can allow the user 108 to translate process models into executable workflows, orchestrate the execution of process steps, and manage the flow of data and tasks between different systems, components, or users. The process automation system 130 may incorporate RPA capabilities, allowing it to generate and deploy RPA bots that correspond to specific tasks or agents.

In some examples, the process automation system 130 enables the user 108 to automate certain tasks (e.g., repetitive tasks) using bots. The process automation system 130 can incorporate artificial intelligence (AI) features, such as intelligent document processing, which helps automate data extraction and decision-making processes. The process automation system 130 can provide a suitable user interface (e.g., via the web interface 138) to enable the user 108 to utilize its features.

The multi-agent simulation system 132 enables the simulation and optimization of processes using a multi-agent approach. The multi-agent simulation system 132 can generate, train, configure, and adapt multiple software agents, each representing a single task in a process. In some examples, the multi-agent simulation system 132 configures these agents according to a given process model, simulates process execution, and generates simulation results.

In some examples, the multi-agent simulation system 132 can compare simulation results with baseline results or real-world runtime results, adjust configurations based on these comparisons, and generate adjusted process models or setups. The multi-agent simulation system 132 can provide a suitable user interface (e.g., via the web interface 138) to enable the user 108 to utilize its features.

The server system 104 can further include an AI system 142 that provides various AI-related functionality. For example, the AI system 142 can communicate with the multi-agent simulation system 132 to provide training or retraining of machine learning models, to configure software agents with AI functionality, to process or access training data, or to provide access to externally hosted machine learning tools, such as one or more machine learning model(s) 114 accessible via an external server 116.

In some examples, the application server 122 is part of a cloud-based platform provided by a software provider that allows the user 108 to utilize the tools of the process modeling system 128, the process automation system 130, or the multi-agent simulation system 132. For example, the user 108 is an account holder with the software provider and accesses the process modeling system 128, the process automation system 130, or the multi-agent simulation system 132 using suitable credentials.

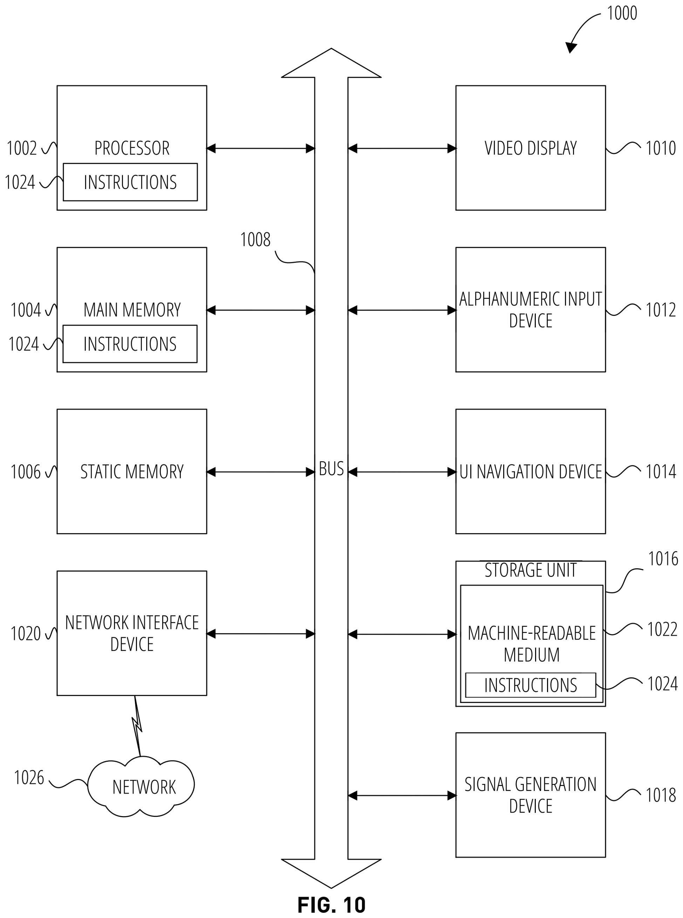

One or more of the application server 122, the database servers 134, the API server 124, the web server 126, the process modeling system 128, the process automation system 130, or the multi-agent simulation system 132 may each be implemented in a computer system, in whole or in part, as described below with respect to FIG. 10. In some examples, external applications (which may be third-party applications or applications provided by the software provider referred to above), such as an external application 118 executing on an external server 120, can communicate with the application server 122 via the programmatic interface provided by the API server 124. For example, a third-party application may support one or more features or functions on a website or platform hosted by a third party, or may perform certain methodologies and provide input or output information to the application server 122 for further processing or publication.

The server system 104 may communicate with the external server 116 to access features of the one or more machine learning model(s) 114. In other examples, the one or more machine learning model(s) 114 are hosted locally at the server system 104 (e.g., as part of the AI system 142), and the architecture shown in FIG. 1 is thus merely one example.

In some examples, the one or more machine learning model(s) 114 is or includes a machine learning model known as a "language model." A language model that contains a significant number of parameters (e.g., in excess of a billion) may be known as a "Large Language Model," or "LLM," while a language model with fewer parameter (e.g., millions, but less than billion) may be known as a "Small Language Model," or "SLM."

A language model may include a computational model developed for the tasks of processing, generating, and understanding human language or human-readable content. It employs machine learning methodologies, including deep learning architectures. The training of a language model may utilize comprehensive training data, such as vast data sets of textual content, to enable the language model to recognize patterns in language or other text. The language model may be built upon a neural network framework, such as the transformer architecture (e.g., a transformer-based LLM). A transformer adopts the mechanism of self-attention, differentially weighting the significance of different parts of the input data. In some examples, one or more software agents of the multi-agent simulation system 132 are implemented using language models.

A processing engine (e.g., at the AI system 142 or at the external server 116) may handle certain preprocessing of data before sending it to the machine learning model(s) 114, and certain postprocessing of the responses received from the machine learning model(s) 114. For preprocessing, the processing engine may tokenize, compress, or format the data to optimize it for machine learning model(s) 114. For postprocessing, it may format the response, perform detokenization or decompression, and prepare the response for sending back to a requesting system.

In some examples, a generative AI model, such as a language model as described above, is fine-tuned on specific tasks. For example, an LLM may be pre-trained so as to have a so-called "world knowledge," and subsequently fine-tuned using event logs for a specific task in a process to improve its ability to perform that specific task. In this way, a fine-tuned model can be applied as a software agent in a multi-agent system of the present disclosure.

The network 102 may be any network that enables communication between or among machines, databases, and devices. Accordingly, the network 102 may be a wired network, a wireless network (e.g., a mobile or cellular network), or any suitable combination thereof. The network 102 may include one or more portions that constitute a private network, a public network (e.g., the Internet), or any suitable combination thereof.

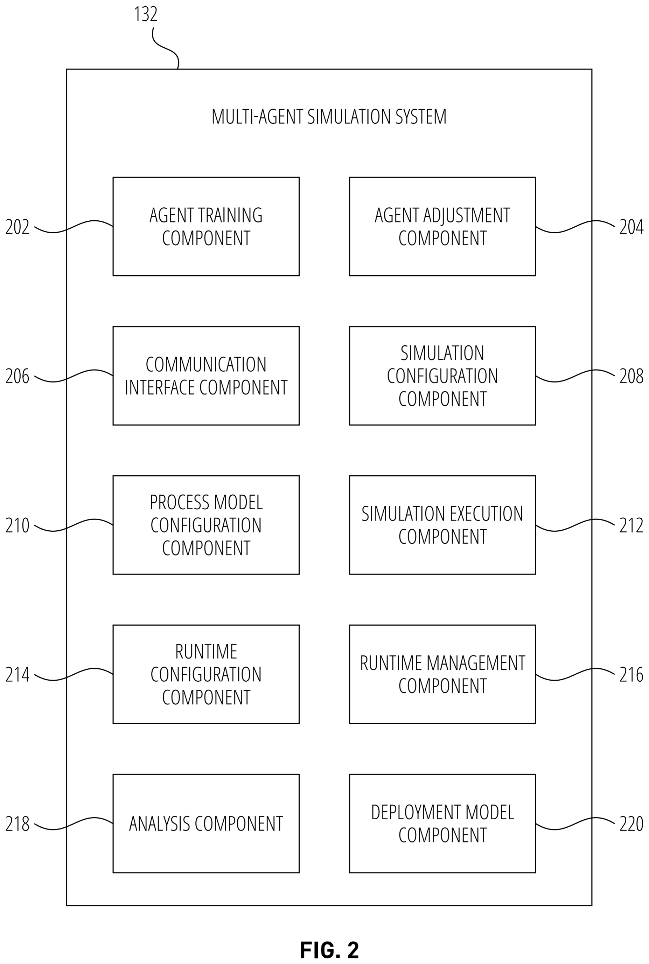

FIG. 2 illustrates components of the multi-agent simulation system 132 of FIG. 1, according to some examples. The multi-agent simulation system 132 is shown to include an agent training component 202, an agent adjustment component 204, a communication interface component 206, a simulation configuration component 208, a process model configuration component 210, a simulation execution component 212, a runtime configuration component 214, a runtime management component 216, an analysis component 218, and a deployment model component 220. It is noted that the multi-agent simulation system 132 may operate in conjunction with the process modeling system 128, the process automation system 130, or the AI system 142 to perform certain functions, and that at least some functionality described with reference to FIG. 2 may thus be shared or partially shared between the multi-agent simulation system 132 and one or more other systems.

The agent training component 202 is responsible for the training or configuring of individual software agents. In some examples, the agent training component 202 accesses and processes historical process data to train or configure the agents. For example, the database 136 includes event log data, which is automatically mined and analyzed by the agent training component 202 to cause the agents to learn the behavior of respective individual tasks of a process. The agent training component 202 can create a one-to-one mapping between agents and specific tasks in the process, allowing for precise modeling and simulation of individual process steps.

Historical process data may include recorded information about past executions of a process, typically stored in event logs, as mentioned above, or other data repositories. The historical process data may capture information such as a sequence of activities, timestamps, and other relevant attributes associated with process instances. In some examples, historical process data further includes information such as the duration of tasks, resource utilization, process variants, and performance metrics.

From a machine learning perspective, the historical process data can be used as training data to allow agents to learn patterns, behaviors, or decision-making based on real-world process executions. For instance, historical process data might include records of past customer orders, including the time taken to process each order, the resources involved, and the outcomes of various process steps. In this way, an agent can accurately represent a task by mirroring the manner in which the task is typically executed in the real world.

Where an agent is provided by a machine learning model, the training of the agent may include training the machine learning model on a subset of a larger set of historical process data. The subset relates to the single task that the software agent represents. The agent training component 202 can communicate with the AI system 142 to perform such training.

In some examples, the machine learning model comprises a fine-tuned language model, and the training of the software agent includes accessing a pre-trained language model (e.g., a pre-trained LLM or SLM) and generating the fine-tuned language model by fine-tuning the pre-trained language model on the specific historical process data related to the single task. In some examples, the agent training component 202 generates a one-to-one mapping between the fine-tuned language model and the single task that the software agent represents.

Such a process can be automatically performed for each type of agent to be used to simulate the process. By leveraging the historical process data as training data, it is possible to train agents to simulate variations in the process, such as by adjusting parameters of workflow steps.

In some examples, one or more of the agents configured by the agent training component 202 are not machine learning-based agents. For example, at least one of the agents might be a simple rules-based agent, or an agent that runs a script. Various different agent types can be combined to form a complete set of agents for a particular multi-agent system.

The multi-agent simulation system 132 may be configured to run certain simulations as part of a training phase in which the software agents are trained or configured. For example, the agent training component 202 can cooperate with the simulation configuration component 208 and the simulation execution component 212 to perform a baseline simulation. The baseline simulation may be an initial simulation run of a process according to a process model derived from historical process data. Such a process model can be referred to as a baseline process model since it represents an existing process or an existing configuration for executing the process.

A baseline simulation can serve as a reference point for comparing subsequent simulations. For instance, the baseline simulation aims to replicate the behavior of the existing process as closely as possible, providing a starting point for identifying areas of improvement. A baseline simulation can also be referred to as an "as-is" simulation.

Baseline results generated by running the baseline simulation may include performance indicators or metrics, such as key performance indicators (KPIs), efficiency data, and data describing behavior of the current process before changes are applied. In some examples, baseline results may encompass various KPIs, such as process completion times, throughput rates, resource utilization, bottlenecks, and overall efficiency.

Baseline results can thus serve as a benchmark against which the outcomes of subsequent simulations and process modifications can be compared to assess improvements or changes. Furthermore, the baseline results can be used, before finalizing the agents and starting the actual simulation phase, to adjust agents during the training phase to bring the behavior of the agents more into line with the behavior exhibited by the existing process.

The agent adjustment component 204 allows for the modification, retraining, or reconfiguration of agents. In some examples, the agent adjustment component 204 performs adjustments during the training phase (e.g., to bring baseline results closer to historical data). In other examples, the agent adjustment component 204 performs adjustments during a simulation phase in which a new or adjusted process model is being tested, as described in greater detail elsewhere. The agent adjustment component 204 enables the multi-agent simulation system 132 to iteratively improve the accuracy and effectiveness of a simulation.

The communication interface component 206 facilitates communication between agents. In some examples, the communication interface component 206 defines protocols, components, or rules for agents to exchange information within a multi-agent system. In some examples, communication paths between agents are derived from event log data during process mining, such as by assessing timestamp and activity information in process logs.

The simulation configuration component 208 is responsible for configuring simulations. For example, a simulation configuration component 208 configures a multi-agent system to simulate a process based on a given process model by combining trained agents in a suitable manner and enabling a communication interface. This may involve configuring the multi-agent system with the appropriate number and types of agents, as well as defining initial conditions and parameters for the simulation. The simulation configuration component 208 can configure a multi-agent system to simulate an existing version of the process (e.g., according to the baseline process model) or a new version of the process (e.g., according to a candidate process model for the process).

The process model configuration component 210 handles the integration of process models into the multi-agent simulation system 132. In some examples, the process model configuration component 210 communicates with the process modeling system 128 to translate BPMN or other process representations into a format suitable for multi-agent systems. In some examples, the process modeling system 128 iteratively adjusts a process model, and thus also the multi-agent system, that is being tested through simulations. The process model that is being tested through simulations may be referred to as the "candidate process model."

The simulation execution component 212 executes simulations using a configured multi-agent system. In some examples, the simulation execution component 212 manages the execution of agents according to their specific parameters, tracks their interactions, and collects simulation results. In some examples, the simulation execution component 212 runs a simulation at least until the multi-agent system reaches equilibrium, and then generates simulation results that can be compared with other results.

During the simulation, the simulation execution component 212 executes the logic or rules of each agent to cause the agents to operate autonomously, thereby completing their respective tasks and communicating outputs to other agents. In some examples, the simulation execution component 212 automatically introduces errors into the process during the simulation, essentially forcing the agents to dynamically adapt to changes or disturbances in the process environment. This may cause the multi-agent system to reach a new or different equilibrium. For example, the simulation execution component 212 is configured to deliberately push a simulated system out of a current state such that a new state is dynamically found, which could be better (e.g., more efficient) than the current state. Examples of such errors can include simulating task delays (e.g., introducing a delay in a "generate purchase order" task), simulating missing or incomplete data, simulating communication failures (e.g., introducing errors that cause failures in a "send purchase order" task), or introducing decision-making errors (e.g., routing a purchase order to an incorrect node).

The simulation execution component 212 generates simulation results that can be analyzed to assess outcomes or performance of the simulation. Simulation results can include or be processed to provide performance indicators or metrics, such as KPIs, efficiency data, and data describing behavior of the process according to the configuration that was simulated. Simulation results may encompass various KPIs, such as process completion times, throughput rates, resource utilization, bottlenecks, and overall efficiency. In some examples, the simulation results essentially provide a synthetic event log that can be compared against a historic event log to determine how the simulation performs against a baseline.

The runtime configuration component 214 generates a runtime configuration based on the simulated process model. A runtime configuration, in this context, refers to an operational setup derived from the simulated process model for executing the process in a real-world environment. The runtime configuration can include specifications or settings for implementing the process, such as RPA bot configurations, workflow settings, and resource allocation guidelines, which are used to generate runtime results for comparison with simulation results.

The runtime management component 216 causes execution of the process using the runtime configuration. For example, the runtime management component 216 communicates the runtime configuration to the process automation system 130, and the process automation system 130 runs the process in an automated manner, returning runtime results to the runtime management component 216.

Runtime results may include performance data collected from the actual execution of a process in a real-world environment, typically using the runtime configuration derived from the simulated process model. The runtime results can include or be processed to provide performance indicators or metrics, such as KPIs, efficiency data, and data describing behavior of the process according to the configuration that was executed. Runtime results may encompass various KPIs, such as process completion times, throughput rates, resource utilization, bottlenecks, and overall efficiency.

The runtime results reflect the real-world behavior and performance of the process, including factors that may not have been fully captured in the simulation. It may thus be useful to compare the runtime results with the corresponding simulation results. In some examples, runtime results are used to validate and refine the accuracy of the simulation model, allowing for iterative improvements to the process. For instance, runtime results might reveal unexpected bottlenecks or variations in task completion times that were not apparent in the simulation, prompting adjustments to the (candidate) process model or agent configurations.

The analysis component 218 is responsible for analyzing and comparing results. For example, the analysis component 218 compares the simulation results with baseline results to determine whether simulation performance is good enough (e.g., according to a predetermined condition or based on predetermined performance indicators for the process) for the multi-agent simulation system 132 to move forward with a real-world execution. Furthermore, the analysis component 218 compares the simulation results with the runtime results after the real-world execution to determine whether to adjust the process model that is being tested.

In some examples, simulation results may be used to analyze the behavior of a process under different scenarios or conditions, allowing for the identification of potential improvements or optimizations. For instance, simulation results might reveal that increasing the number of agents handling a particular task could significantly reduce overall process completion time. In some examples, the analysis component 218 generates improvement recommendations based on the simulation results, or based on comparisons between the simulation results and other results.

The deployment model component 220 generates a deployment process model. For example, the multi-agent simulation system 132 iteratively adjusts a process model and tests each iteration by comparing simulation results and runtime results. Once the simulation results are satisfactory, the deployment model component 220 generates a deployment process model that corresponds to the adjusted process model that was most recently tested. In some examples, the multi-agent simulation system 132 detects that the simulation results meet a condition relative to the runtime results, such as a KPI of the simulation being within a threshold value of the same KPI of the runtime results, and automatically triggers creation of the deployment model in response thereto.

The deployment process model provides a blueprint for implementing the improved version of the process in real-world systems. For instance, a deployment process model for an order fulfillment process might specify the exact sequence of tasks, the number of resources required for each task, and the integration points with existing systems, all adjusted from an initial model based on the insights gained from simulation and real-world testing. The deployment process model can be published or stored by the multi-agent simulation system 132 for downstream use.

In some examples, at least some of the systems or components shown in FIG. 1 or FIG. 2 are configured to communicate with each other to implement aspects described herein. One or more of the systems or components described herein may be implemented using hardware (e.g., one or more processors of one or more machines) or a combination of hardware and software. For example, a system or component described herein may be implemented by a processor configured to perform the operations described herein for that system or component. Moreover, two or more of these systems or components may be combined into a single system or component, or the functions described herein for a single system or component may be subdivided among multiple systems or components. Furthermore, according to various examples, systems or components described herein may be implemented using a single machine, database, or device, or be distributed across multiple machines, databases, or devices.

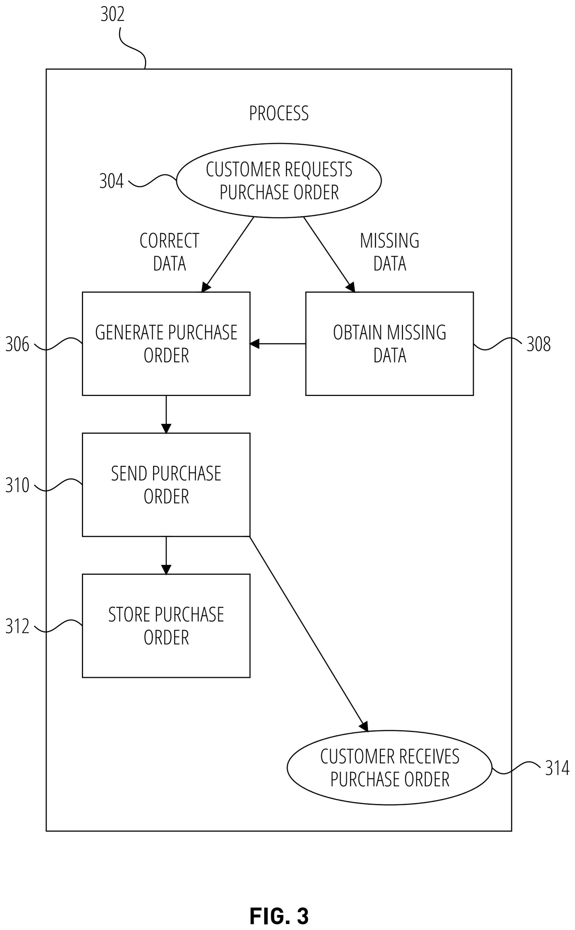

FIG. 3 is a flowchart illustrating tasks of a process 302, according to some examples. The process 302 starts with a start event 304, where a customer requests a purchase order, and ends with an end event 314 that occurs when the customer receives the purchase order.

Various tasks are performed between the start event 304 and the end event 314. As shown in FIG. 3, the tasks include a task 306 to generate the purchase order and a task 308 to obtain missing data. The task 308 is performed if the customer request (start event 304) includes insufficient data. The tasks further include a task 310 to send the purchase order, and a task 312 to store the purchase order. In a multi-agent system, the process 302 can be modeled using different agents for the different tasks. For example, a first software agent is configured to simulate the task 306, a second software agent is configured to simulate the task 308, a third software agent is configured to simulate task 310, and a fourth software agent is configured to simulate the task 312.

It is noted that FIG. 3 provides a simplified example and that processes to be simulated may be significantly more complex than the process 302 illustrated in FIG. 3. In some examples, for at least some of the tasks, a language model is fine-tuned to obtain respective fine-tuned language models for simulating the behavior of respective agents. Other tasks can be simulated using rules engines, for example.

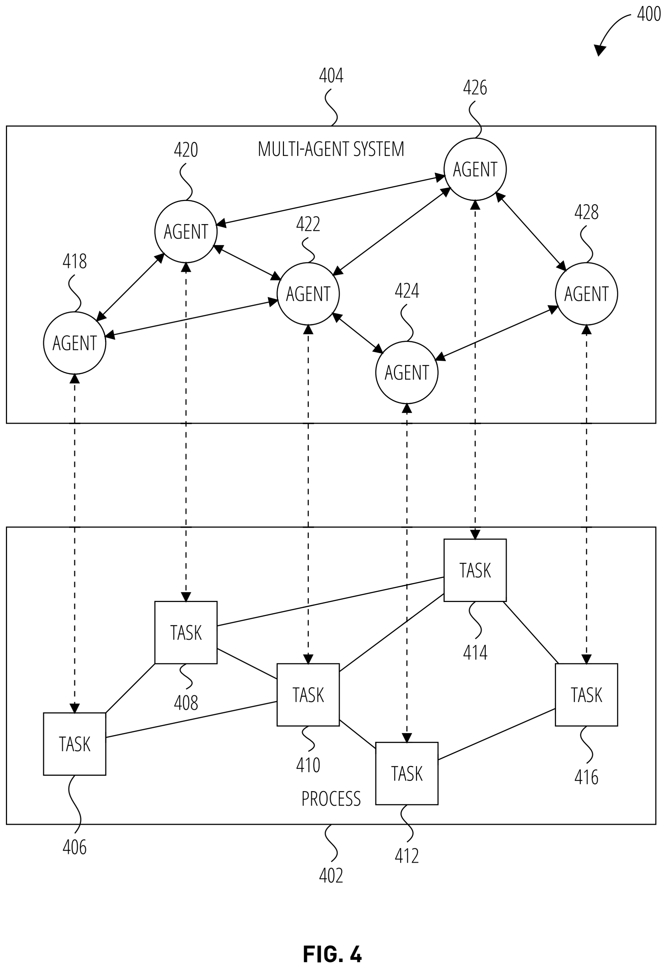

FIG. 4 is a diagram 400 that illustrates the mapping of tasks of a process 402 to agents in a multi-agent system 404, according to some examples. The process 402 includes tasks 406, 408, 410, 412, 414, and 416. A task is a specific activity or step within the process 402. For example, the process 402 might be a business process similar to the process 302 (but with more steps).

Each task is mapped to a respective agent in the multi-agent system 404. More specifically, the task 406 is mapped to an agent 418, the task 408 is mapped to an agent 420, the task 410 is mapped to an agent 422, the task 412 is mapped to an agent 424, the task 414 is mapped to an agent 426, and the task 416 is mapped to an agent 428.

In the example of FIG. 4, the tasks in the process 402 represent the individual steps that, when combined, form a complete business process. The multi-agent system 404 models the behavior of the process 402 by training or configuring agents to simulate these tasks. The agents are interconnected, as shown in FIG. 4, indicating their ability to communicate and interact with each other within the multi-agent system 404. Communication paths can be generated based on event logs, for example. The tasks can be performed (e.g., simulated) serially, in parallel, or partially in parallel.

Each task typically has defined inputs, outputs, and performance parameters such as duration, cost, quality metrics, or limitations on how many times the task can be performed in a certain period. An agent is thus trained or configured with such performance parameters to ensure that the agent behaves similarly to how the task is performed in the process 402. The behavior of an agent is thus defined or affected by its performance parameters. Agent behavior may also incorporate buffers to simulate buffers in the process 402.

The one-to-one mapping approach allows for a granular representation of the business process, enabling not only more precise simulation and analysis of the process 402, but also easier, more precise, and less resource-intensive adjustment of the configuration.

In some examples, the multi-agent system 404 represents a digital twin of a workflow of the process 402, simplifying the complete workflow by modeling an autonomous agent for each logical step. In some examples, by modeling the behavior of each step, the overall system behavior emerges naturally through agent communication, eliminating the need for explicit modeling of an entire system.

In some examples, communication between agents in the multi-agent system 404 corresponds to transitions between steps in the workflow, facilitating guided information flow. In other approaches, such as Petri nets, it may be necessary to describe all possible transitions with logic expressions. However, in a multi-agent system, transitions can be retrieved automatically out of a process mining operation.

Since each task of the process 402 is different, each agent of the multi-agent system 404 is of a different type (e.g., it has unique behavior), and each agent is uniquely mapped to a task. It is noted that multiple instances of a particular agent can be included in the multi-agent system 404. For example, the multi-agent system 404 may include multiple identical instances of the agent 418 to speed up the performance of the task 406 during a simulation.

During the simulation phase, which is described in greater detail elsewhere in the present disclosure, additional agents of a specific type can be added and executed in parallel. This can result in faster processing and increase overall throughput. Additionally, modifying the performance parameters of an agent can be relatively easily performed without dealing with a complex rule set or having to adjust a multi-functional agent.

More generally, characteristics of a multi-agent system may include:
- Autonomy: agents may be active and are responsible for their own activities.
- Complexity: decision-making mechanisms are included and the multi-agent system can operate based on learning or reasoning.
- Adaptability: agents can be adjusted based on dynamic changes.
- Concurrency: parallel processing can be handled.
- Communication: both inter-agent and intra-agent communication are possible.
- Distribution: a multi-agent system may operate on different hosts or distributed over a network.
- Mobility: agents may migrate between platforms and environments.

In some examples, process mining allows a multi-agent system to establish a one-to-one correspondence between respective activities in historical process data, such as event log data, and agent types in the multi-agent system 404. Table 1 illustrates an example mapping of event log data to a multi-agent system, and also shows equivalent BPMN data, for context.

**Table 1**

| **Event log data for process** | **BPMN diagram of process** | **Multi-agent system** |
|---|---|---|
| Activity | Process step | Agent type |
| Timestamp indicating a change on a certain activity | Transitions derived from timestamps and labels | Transition defines communication path (which output of one agent will be the input for another agent) |
| Label for all activities belonging to the process (e.g., case identifier) | Process name | Multi-agent system configuration |

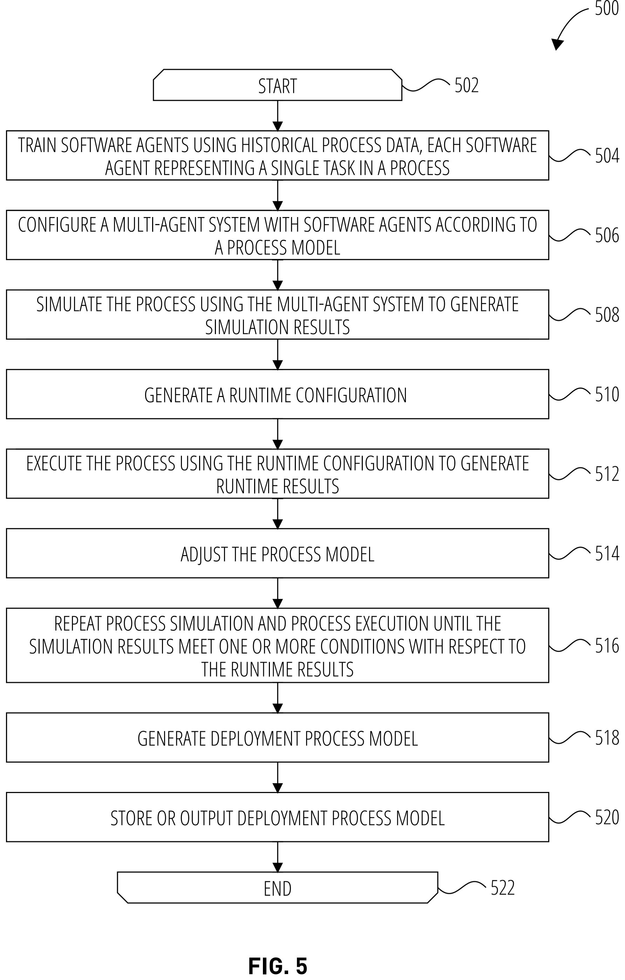

FIG. 5 is a flowchart illustrating operations of a method 500 for using a multi-agent system to simulate a process, according to some examples. By way of example and not limitation, aspects of the method 500 may be performed by components, devices, or systems shown in FIG. 1 or FIG. 2. Accordingly, such components, devices, or systems may be referenced below.

The method 500 starts at opening loop operation 502 and proceeds to operation 504, where the multi-agent simulation system 132 trains software agents using historical process data. For example, the agent training component 202 of FIG. 2 automatically trains and/or configures the agents of a multi-agent system (e.g., the multi-agent system 404 of FIG. 4) such that each agent represents a single task of a process (e.g., the process 402 of FIG. 4).

In some examples, the multi-agent simulation system 132 leverages data from event logs to model data flow, performance, or behavior of the process. In some examples, at least some of the agents are implemented as machine learning models that are trained to simulate their respective tasks. Operation 504 may form part of a training phase that is automatically performed by the multi-agent simulation system 132.

The method 500 then proceeds to operation 506, where the multi-agent simulation system 132 (e.g., the simulation configuration component 208) configures a multi-agent system (e.g., the multi-agent system 404 of FIG. 4) to operate, using a combination of the trained or configured software agents, in accordance with a particular process model. For example, the multi-agent system is set up to provide a digital twin of the process or a version of the process that is being tested.

At operation 508, the multi-agent simulation system 132 (e.g., the simulation execution component 212) automatically simulates the process using the multi-agent system to generate simulation results. In some examples, the multi-agent simulation system 132 automatically executes the multi-agent system according to the specific setup until the multi-agent system reaches equilibrium, and the simulation results are generated after the multi-agent system reaches equilibrium to provide values of, for example, KPIs associated with the process when running in a steady state.

Various monitoring tools can be used by the simulation execution component 212 or the analysis component 218 to generate the simulation results. For example, within the simulation, the multi-agent simulation system 132 takes a snapshot of the (simulated) running of the process at predetermined intervals (e.g., every hour) and measures or stores the relevant KPI values or other performance indicator values. The multi-agent simulation system 132 may automatically measure individual actions of respective agents (e.g., individual throughput rates) and also observe overall results (e.g., overall system throughput rate). In some examples, the simulation results are stored in the database 136.

As mentioned, in some examples, during the simulation, the multi-agent simulation system 132 automatically introduces errors into the simulation to test the ability of the simulation to dynamically adapt to changes and disturbances (e.g., to reach a steady state thereafter). For example, and in contrast with other systems such as state machines or Petri nets, the multi-agent system automatically reaches equilibrium even when certain disturbances occur.

At operation 510, the multi-agent simulation system 132 generates a runtime configuration to allow for integration with a real-world process. For example, the multi-agent simulation system 132 communicates with the process automation system 130 to generate an RPA bot setup for executing the simulated configuration in a real system. The RPA bots are automatically generated using, for example, a generative AI-driven bot generator that is designed and configured to create a bot that operates in the same (or substantially the same) way as its corresponding agent from the simulation. In some examples, before triggering operation 510, the simulation results (e.g., one or more KPIs in the simulation results) are compared against baseline results for an as-is simulation of the training phase, with the multi-agent simulation system 132 only triggering operation 510 if the simulation results meet a threshold or condition.

The real-world process is then executed at operation 512 to generate runtime results. For example, the automatically created RPA bot setup is run on a real (e.g., "live") system to obtain runtime data indicating how well the simulation performed. In some examples, the runtime results (e.g., the same one or more KPIs) are automatically compared against the simulation results by the multi-agent simulation system 132 (e.g., the analysis component 218). In some examples, and as shown at operation 514, the currently tested process model that determines the multi-agent system configuration is adjusted based on this comparison (e.g., if the simulation results and the runtime results are not sufficiently similar). For example, the analysis component 218 detects that the performance of the process as reflected in the synthetic event logs generated during operation 508 is worse than that performance of the real-world version of the process as reflected in real event logs generated during operation 512 (e.g., based on a predetermined KPI selected for the process), and proceeds to trigger adjustment thereof by the process model configuration component 210 or the simulation configuration component 208.

Automatically adjusting the process model based on the comparison between simulation and runtime results, and automatically repeating the simulation and execution phases, allows for dynamic adaptation to changes or disturbances in the environment. This iterative refinement process ensures that the multi-agent system can reach an equilibrium that closely matches real-world conditions, thereby improving the overall robustness and reliability of the process model.

In some examples, and as shown at operation 516, the simulation of the process and the real-world execution thereof are automatically repeated by the multi-agent simulation system 132 until the simulation results meet one or more conditions (e.g., predefined performance measures) with respect to the runtime results. For example, the process model is adjusted, and the simulation and execution are repeated, until the relevant KPIs of the simulation results are within a predetermined range or threshold from the relevant KPIs of the runtime results. In other examples, the performance of the process during the simulation may immediately be satisfactory when compared to the runtime results, with no configuration changes and repeating of the simulation being needed. In such cases, the "adjustment" of the process model based on the comparison between the simulation results and the runtime results may simply involve finalizing the current candidate process model as a deployment process model.

At operation 518, the deployment model component 220 generates the deployment process model, and the deployment process model is stored and/or output to the user 108 via the user device 106 at operation 520. For example, the deployment process model includes an RPA-based blueprint for deploying the process. The deployment process model may provide a production-ready process automation that can be used by the user 108 or run by the process automation system 130. This translates the improvements or optimizations into a practical application for a real-world setting. The method 500 concludes at closing loop operation 522.

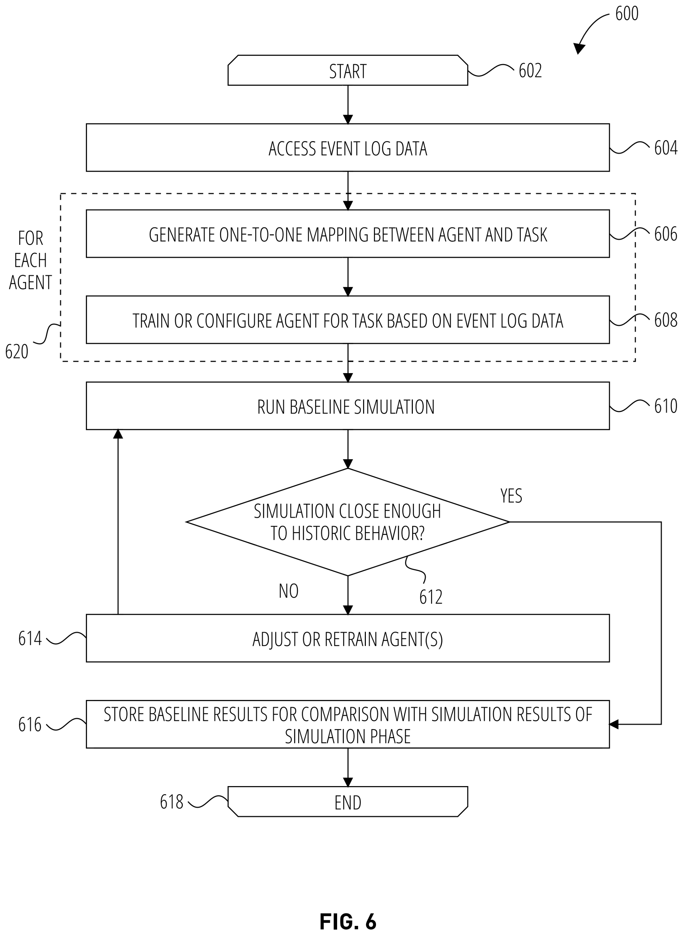

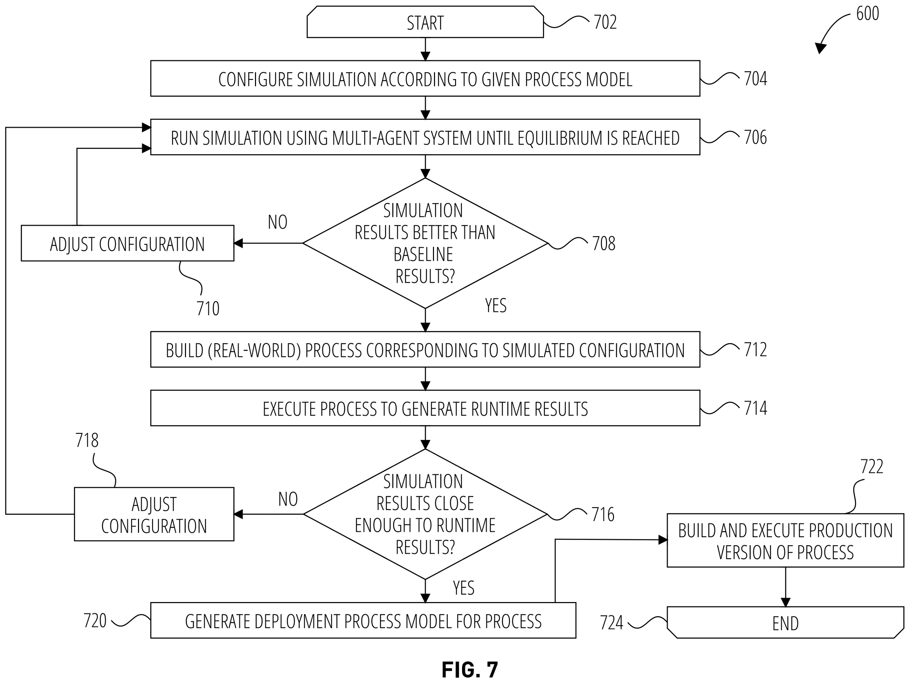

FIG. 6 and FIG. 7 collectively illustrate a training phase, a simulation phase, and an execution phase of a method 600 that utilizes a multi-agent system for simulation, according to some examples. FIG. 6 and FIG. 7 capture progression from initial training to simulation and real-world execution. By way of example and not limitation, aspects of the method 600 may be performed by components, devices, or systems shown in FIG. 1 or FIG. 2. Accordingly, such components, devices, or systems may be referenced below.

FIG. 6 illustrates aspects of the training phase of the method 600. The method 600 starts with the training phase at opening loop operation 602 and proceeds to operation 604, where the multi-agent simulation system 132 accesses event log data associated with a particular process (e.g., the process 402 of FIG. 4).

The event log data indicates, for each task in the process, information such as the activity performed, timestamp of the activity, and a case identifier associating the activity with a specific process instance. The event log data may also include additional attributes, such as resource utilization, task duration, and other relevant performance metrics. For each agent (as indicated by loop 620 in FIG. 6), the multi-agent simulation system 132 generates a one-to-one mapping between the agent and a respective task of the process (operation 606), and trains or configures the agent at operation 608, based on the event log data, to simulate the respective task. Accordingly, in some examples, behavior of an individual task is automatically learned by an agent as a result of the multi-agent simulation system 132 mining the event logs associated with that individual task and configuring the agent accordingly.

At operation 610, the multi-agent simulation system 132 runs a baseline simulation. For example, the multi-agent simulation system 132 uses an as-is version or model of the process, corresponding to historical process data (e.g., event log data) for the process, and configures a multi-agent system (e.g., the multi-agent system 404 of FIG. 4) to simulate the process in an as-is manner. This results in the generation of baseline results associated with the historical process data.

At decision operation 612, the multi-agent simulation system 132 compares the baseline results against the historic behavior of the process as reflected in the historical process data. For example, the multi-agent simulation system 132 checks whether the baseline simulation performs in a similar manner (e.g., within a predefined margin of error for a set of performance indicators) to the process as reflected in the event log data.

If the simulation is not close enough to the historic behavior, the multi-agent simulation system 132 automatically adjusts or retrains one or more of the agents at operation 614, and the method 600 returns to operation 610. For example, based on the as-is analysis, parameters of one or more of the agents are adjusted to more closely reflect behavior of the process in its current state. Since the baseline simulation is performed on a fixed process model based on historical process data, the baseline results enable the multi-agent simulation system 132 to assess dependencies within the process and better configure the agents to reflect the appropriate behavior. Various adjustment or retraining techniques can be employed. In some examples, one or more of the agents are retrained based on new event logs. For example, the multi-agent simulation system 132 can process the new event logs to exclude outliers or to focus more on average numbers, and then retrain or update one or more of the agents based on such new and/or processed data.

On the other hand, if the simulation is close enough to the historic behavior, the method 600 proceeds from decision operation 612 to operation 616, where the baseline results are stored for further use during the simulation phase. The training phase ends at closing loop operation 618.

FIG. 7 illustrates aspects of the simulation phase and the execution phase of the method 600. The simulation phase of the method 600 commences at opening loop operation 702, and the method 600 proceeds to operation 704, where the multi-agent simulation system 132 automatically configures a simulation according to a given process model (e.g., a candidate process model).

In operation 704, pre-trained or pre-configured software agents from the simulation phase are automatically combined by the multi-agent simulation system 132 to configure the simulation as needed, and the simulation is performed automatically by the multi-agent simulation system 132 at operation 706.

For example, instead of configuring a simulation for the as-is or fixed process model from the simulation phase, the multi-agent simulation system 132 configures a candidate process model for testing a new version, variant, or execution model of the process. In some examples, operation 706 involves setting up the software agents according to a BPMN process model for the process, but removing fixed communication paths that were applied during the training phase to allow the multi-agent simulation system 132 to explore new communication paths that can automatically be discovered by allowing the software agents of the multi-agent system to operate without such constraints. In traditional simulation systems, a user typically has to configure all possible paths from one state to the next state. However, such an approach can have drawbacks as discussed elsewhere in the present disclosure. In some cases, when analyzing event logs, it may become apparent that users are not strictly operating in accordance with a given process and instead performing steps differently, which may have benefits (e.g., improve efficiency). Removing such fixed communication paths thus provides greater flexibility, allowing the multi-agent simulation system 132 to get closer to real behavior as opposed to the manner in which a process is theoretically defined.

Accordingly, in some examples, the multi-agent simulation system 132 utilizes a baseline process model that mirrors the as-is version of the process during the training phase, and then tests a candidate process model during the simulation phase to explore possible improvements to, for example, the efficiency or flow of the process.

In some examples, during the training phase, the baseline simulation is performed on the baseline process model to understand existing process behavior and performance and to validate the agents against real-world data during the training phase, thereby ensuring that the correct behavior is configured into the agents. The baseline results also establish a baseline for comparison with future simulation results. On the other hand, during the simulation phase of FIG. 7, new or modified process configurations can be tested using a candidate process model. This can be done, for example, to evaluate potential improvements, to test "what-if" scenarios, or to predict the performance of new process designs or variations. The candidate process model is tested by using the software agents that were trained or configured in the training phase, but with at least some parameters or configuration settings differing from those of the training phase.

The multi-agent simulation system 132 runs the simulation by executing the software agents (each simulating its respective individual task) until equilibrium is reached, and stores the simulation results that are captured during or after the simulation. In some examples, historical process data associated with the process can be used in both the simulation phase and in the training phase. For example, if the historical process data includes event logs spanning three years, the data for the first two years can be used by the multi-agent simulation system 132 to automatically train or configure the agents in the simulation phase, while data for the third year can be used as input by the multi-agent simulation system 132 to automatically run the simulation in the simulation phase.

The method 600 proceeds to decision operation 708, where the multi-agent simulation system 132 (e.g., the analysis component 218) compares the simulation results against the baseline results from the training phase. For example, the multi-agent simulation system 132 automatically assesses performance data indicative of the performance of the baseline process model against performance data indicative of the performance of the candidate process model.

If the simulation results are not better than the baseline results, the method 600 proceeds to operation 710 where the configuration is adjusted. For example, if one or more predetermined KPIs do not exceed those in the baseline results by more than a threshold value, the method 600 proceeds to operation 710. As an example, a project may involve overcoming issues that are known from process mining, such as a KPI that is poor because a given process task performed by a single human worker (in the real-world process) is too slow. In such a case, adjustment can involve the multi-agent simulation system 132 automatically adding one or more agents corresponding to a second person to allow for the throughput of that step to be doubled. After operation 710, the method 600 performs operation 706 again to obtain further simulation results for an adjusted configuration (e.g., an adjusted candidate process model). It is noted that the method 600 can include iterating over various configurations. A large number of process configuration variants (e.g., thousands) can be automatically tested in the simulation environment, since simulation does not affect the production system. Variants can be tested based on predetermined heuristics or algorithms, such as a genetic algorithm that is applied by the multi-agent simulation system 132 to modify configurations (e.g., hiring an additional person or resource for a certain process step).

In some examples, and as shown in FIG. 7, if the simulation results are better than the baseline results, the method 600 proceeds from decision operation 708 to operation 712 where the process is constructed for a real-world execution. For example, the multi-agent simulation system 132 automatically triggers, based on the performance data that was generated by comparing the simulation results with the baseline results, the generation of a runtime configuration for executing a real-world version of the process.

In other words, if the simulation shows a deterioration of the process, the process model that is being tested is automatically revised and re-simulated by the multi-agent simulation system 132 to test a revised version of the process model. If the simulation shows an improvement in the process (or an improvement that at least meets a predetermined condition), the process is automatically "built" for a real-world execution. In some examples, the multi-agent simulation system 132 instructs the process automation system 130 to generate an automated setup of the process using RPA tools.

At operation 714, the method 600 moves to the execution phase, and the multi-agent simulation system 132 or the process automation system 130 executes the real-world version of the process to generate runtime results. The multi-agent simulation system 132 or the process automation system 130 measures real, runtime data that can be compared against the simulation results (e.g., by comparing the relevant KPIs) at decision operation 716.

If, at decision operation 716, the multi-agent simulation system 132 determines that the simulation results for the current configuration (e.g., the current candidate process model) are not sufficiently close to the runtime results that were generated during operation 714, the method 600 proceeds to operation 718 where the configuration is adjusted. This can involve, for example, adjusting the simulation configuration (e.g., adjusting the agent settings in the multi-agent system) or retraining, or reconfiguring, one or more of the agents by the agent adjustment component 204 of the multi-agent simulation system 132. After operation 718, the method 600 performs operation 706 again to obtain further simulation results for an adjusted configuration (e.g., an adjusted candidate process model), and the method 600 proceeds as discussed above.

If, at decision operation 716, the multi-agent simulation system 132 determines that the simulation results for the current configuration are sufficiently close to the runtime results from operation 714, the method 600 proceeds to operation 720 where a deployment process model is generated by the multi-agent simulation system 132. Thus, in response to determining that the simulation results for the currently tested candidate process model correspond (e.g., are sufficiently close or similar based on a predetermined indicator or metric) to the runtime results, the multi-agent simulation system 132 automatically triggers the generating of the deployment process model for deploying the process. Accordingly, in some examples, first performance data is used at decision operation 708 to determine whether the multi-agent simulation system 132 should proceed with the runtime configuration, and second performance data is used at decision operation 716 to determine whether the multi-agent simulation system 132 should proceed to generate the deployment process model.

Executing the process using a runtime configuration based on the process model and comparing the runtime results with the simulation results provides a feedback loop for continuous improvement. This iterative approach ensures that the process model is refined and improved, leading to more accurate and efficient process execution in real-world applications.

In some examples, and as shown in FIG. 7, the method 600 further includes building and executing, by the process automation system 130, a production version to automate and run the process based on the finalized deployment process model at operation 722. The method 600 ends at closing loop operation 724.

In view of the above-described implementations of subject matter this application discloses the following list of examples, wherein one feature of an example in isolation or more than one feature of an example, taken in combination and, optionally, in combination with one or more features of one or more further examples are further examples also falling within the disclosure of this application.

Example 1 is a computer-implemented method performed by a computer system comprising memory and at least one hardware processor, the computer-implemented method comprising: training a plurality of software agents using historical process data, each software agent of the plurality of software agents representing a single task in a process; simulating the process to generate simulation results by executing a multi-agent system in which the plurality of software agents are configured according to a candidate process model for the process and operate autonomously based on the training; executing the process using a runtime configuration that is based on the candidate process model to generate runtime results for comparison with the simulation results; adjusting the candidate process model based on the comparison; repeating the simulating of the process using an adjusted multi-agent system corresponding to the adjusted candidate process model; repeating the executing of the process using an adjusted runtime configuration corresponding to the adjusted candidate process model; and generating a deployment process model for the process based on the adjusted candidate process model.

In Example 2, the subject matter of Example 1 includes, wherein a software agent of the plurality of software agents comprises a machine learning model, and the training of the software agent comprises: training the machine learning model on at least a subset of the historical process data related to the single task that the software agent represents.

In Example 3, the subject matter of Example 2 includes, wherein the machine learning model comprises a fine-tuned language model, and the training of the software agent further comprises: accessing a pre-trained language model; generating the fine-tuned language model by fine-tuning the pre-trained language model on the historical process data related to the single task; and generating a one-to-one mapping between the fine-tuned language model and the single task that the software agent represents.

In Example 4, the subject matter of any of Examples 2-3 includes, wherein each software agent of the plurality of software agents comprises a respective machine learning model that is trained on a respective subset of the historical process data related to a respective single task.

In Example 5, the subject matter of any of Examples 1-4 includes, generating, for each software agent of the plurality of software agents, a one-to-one mapping between the software agent and the single task that the software agent represents, such that the plurality of software agents corresponds to a plurality of tasks defined by the candidate process model.

In Example 6, the subject matter of any of Examples 1-5 includes, wherein the simulating of the process comprises executing a test simulation to test the candidate process model, and the training of the plurality of software agents further comprises: executing a baseline simulation using the plurality of software agents to generate baseline results for a baseline process model associated with the historical process data; and performing at least one of adjusting or retraining of at least a subset of the plurality of software agents based on the baseline results and the historical process data.

In Example 7, the subject matter of any of Examples 1-6 includes, wherein the simulating of the process comprises executing a test simulation to test the candidate process model, the computer-implemented method further comprising: executing a baseline simulation using the plurality of software agents to generate baseline results for a baseline process model associated with the historical process data; generating first performance data by comparing the baseline results with the simulation results; automatically triggering, based on the first performance data, generation of the runtime configuration for the executing of the process; and generating second performance data by comparing the runtime results with the simulation results to enable the adjusting of the candidate process model.

In Example 8, the subject matter of any of Examples 1-7 includes, generating the runtime configuration by automatically configuring Robotic Process Automation (RPA) bots for the executing of the process , wherein the process is automatically executed by the RPA bots to generate the runtime results.

In Example 9, the subject matter of any of Examples 1-8 includes, automatically triggering, based on the comparison, retraining of at least a subset of the plurality of software agents; and automatically repeating the simulating of the process after the retraining of at least the subset of the plurality of software agents.

In Example 10, the subject matter of any of Examples 1-9 includes, wherein the simulating of the process comprises automatically executing the multi-agent system until the multi-agent system reaches equilibrium, and the simulation results are generated after the multi-agent system reaches equilibrium.

In Example 11, the subject matter of Example 10 includes, wherein the simulating of the process comprises automatically introducing errors into the process prior to the generating of the simulation results.

In Example 12, the subject matter of any of Examples 1-11 includes, automatically repeating the adjustment of the candidate process model, the simulating of the process, and the executing of the process until detecting that the simulation results meet at least one predetermined condition with respect to the runtime results; and in response to detecting that the simulation results meet the at least one predetermined condition with respect to the runtime results, triggering the generating of the deployment process model for deploying the process.

In Example 13, the subject matter of any of Examples 1-12 includes, determining, based on one or more predetermined performance indicators, that the simulation results for the adjusted candidate process model correspond to the runtime results for the adjusted candidate process model; and in response to determining that the simulation results for the adjusted candidate process model correspond to the runtime results for the adjusted candidate process model, triggering the generating of the deployment process model for deploying the process.

In Example 14, the subject matter of any of Examples 1-13 includes, wherein trained behavior of each software agent of the plurality of software agents is defined by parameters that control behavior of the software agent.

Example 15 is a system comprising: at least one memory that stores instructions; and one or more processors configured by the instructions to perform operations comprising: training a plurality of software agents using historical process data, each software agent of the plurality of software agents representing a single task in a process; simulating the process to generate simulation results by executing a multi-agent system in which the plurality of software agents are configured according to a candidate process model for the process and operate autonomously based on the training; executing the process using a runtime configuration that is based on the candidate process model to generate runtime results for comparison with the simulation results; adjusting the candidate process model based on the comparison; repeating the simulating of the process using an adjusted multi-agent system corresponding to the adjusted candidate process model; repeating the executing of the process using an adjusted runtime configuration corresponding to the adjusted candidate process model; and generating a deployment process model for the process based on the adjusted candidate process model.

In Example 16, the subject matter of Example 15 includes, wherein a software agent of the plurality of software agents comprises a machine learning model, and the training of the software agent comprises: training the machine learning model on at least a subset of the historical process data related to the single task that the software agent represents.

In Example 17, the subject matter of any of Examples 15-16 includes, wherein the simulating of the process comprises performing a test simulation to test the candidate process model, the operations further comprising: performing a baseline simulation to generate baseline results for a baseline process model; generating first performance data by comparing the baseline results with the simulation results; automatically triggering, based on the first performance data, generation of the runtime configuration for the executing of the process; and generating second performance data by comparing the runtime results with the simulation results to enable the adjusting of the candidate process model

Example 18 is one or more non-transitory computer-readable media storing computer-executable instructions that, when executed by a computing system, cause the computing system to perform operations comprising: training a plurality of software agents using historical process data, each software agent of the plurality of software agents representing a single task in a process; simulating the process to generate simulation results by executing a multi-agent system in which the plurality of software agents are configured according to a candidate process model for the process and operate autonomously based on the training; executing the process using a runtime configuration that is based on the candidate process model to generate runtime results for comparison with the simulation results; adjusting the candidate process model based on the comparison; repeating the simulating of the process using an adjusted multi-agent system corresponding to the adjusted candidate process model; repeating the executing of the process using an adjusted runtime configuration corresponding to the adjusted candidate process model; and generating a deployment process model for the process based on the adjusted candidate process model.

In Example 19, the subject matter of Example 18 includes, wherein a software agent of the plurality of software agents comprises a machine learning model, and the training of the software agent comprises: training the machine learning model on at least a subset of the historical process data related to the single task that the software agent represents.

In Example 20, the subject matter of any of Examples 18-19 includes, wherein the simulating of the process comprises performing a test simulation to test the candidate process model, the operations further comprising: performing a baseline simulation to generate baseline results for a baseline process model; generating first performance data by comparing the baseline results with the simulation results; automatically triggering, based on the first performance data, generation of the runtime configuration for the executing of the process; and generating second performance data by comparing the runtime results with the simulation results to enable the adjusting of the candidate process model.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

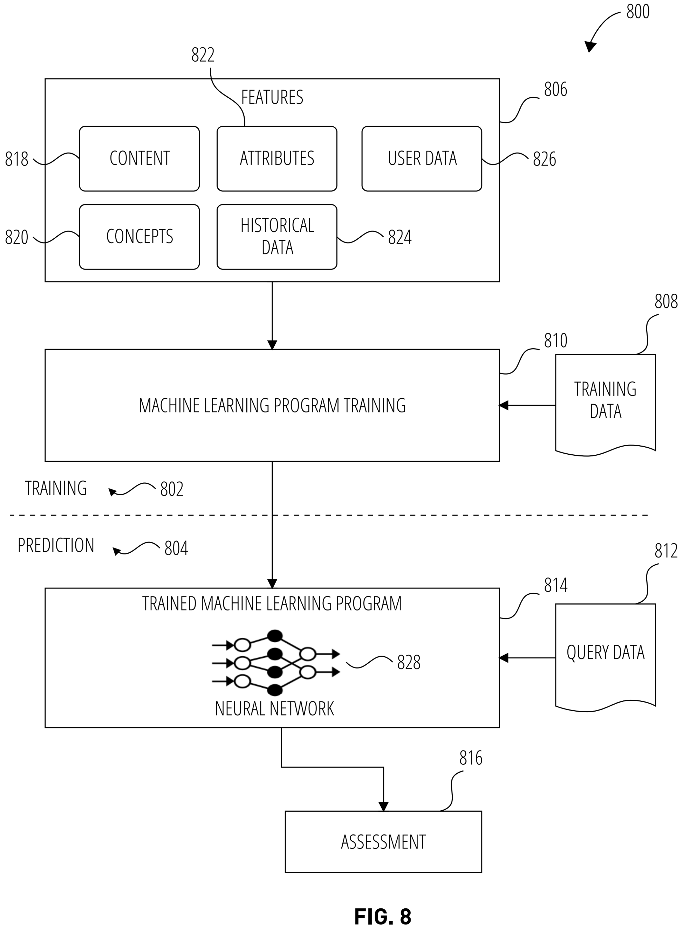

FIG. 8 is a block diagram showing a machine learning program 800, according to some examples. Machine learning programs, also referred to as machine learning algorithms or tools, may be used as part of the systems described herein to perform one or more operations.

Machine learning is a field of study that gives computers the ability to learn without being explicitly programmed. Machine learning explores the study and construction of algorithms, also referred to herein as tools, that may learn from or be trained using existing data and make predictions about or based on new data. Such machine learning tools operate by building a model from example training data 808 in order to make data-driven predictions or decisions expressed as outputs or assessments (e.g., assessment 816). Although examples are presented with respect to a few machine learning tools, the principles presented herein may be applied to other machine learning tools.

In some examples, different machine learning tools may be used. For example, Logistic Regression (LR), Naive-Bayes, Random Forest (RF), neural networks (NN), matrix factorization, and Support Vector Machines (SVM) tools may be used.

Two common types of problems in machine learning are classification problems and regression problems. Classification problems, also referred to as categorization problems, aim at classifying items into one of several category values (for example, is this object an apple or an orange?). Regression algorithms aim at quantifying some items (for example, by providing a value that is a real number).

The machine learning program 800 supports two types of phases, namely training phases 802 and prediction phases 804. In training phases 802, supervised learning, unsupervised or reinforcement learning may be used. For example, the machine learning program 800 (1) receives features 806 (e.g., as structured or labeled data in supervised learning) and/or (2) identifies features 806 (e.g., unstructured or unlabeled data for unsupervised learning) in training data 808. In prediction phases 804, the machine learning program 800 uses the features 806 for analyzing query data 812 to generate outcomes or predictions, as examples of an assessment 816.

In the training phase 802, feature engineering is used to identify features 806 and may include identifying informative, discriminating, and independent features for the effective operation of the machine learning program 800 in pattern recognition, classification, and regression. In some examples, the training data 808 includes labeled data, which is known data for pre-identified features 806 and one or more outcomes. Each of the features 806 may be a variable or attribute, such as individual measurable property of a process, article, system, or phenomenon represented by a data set (e.g., the training data 808). Features 806 may also be of different types, such as numeric features, strings, and graphs, and may include one or more of content 818, concepts 820, attributes 822, historical data 824 and/or user data 826, merely for example.

The concept of a feature in this context is related to that of an explanatory variable used in statistical techniques such as linear regression. Choosing informative, discriminating, and independent features is important for the effective operation of the machine learning program 800 in pattern recognition, classification, and regression. Features may be of different types, such as numeric features, strings, and graphs.

In training phases 802, the machine learning program 800 uses the training data 808 to find correlations among the features 806 that affect a predicted outcome or assessment 816. With the training data 808 and the identified features 806, the machine learning program 800 is trained during the training phase 802 at machine learning program training 810. The machine learning program 800 appraises values of the features 806 as they correlate to the training data 808. The result of the training is the trained machine learning program 814 (e.g., a trained or learned model).

Further, the training phases 802 may involve machine learning, in which the training data 808 is structured (e.g., labeled during preprocessing operations), and the trained machine learning program 814 implements a relatively simple neural network 828 capable of performing, for example, classification and clustering operations. In other examples, the training phase 802 may involve deep learning, in which the training data 808 is unstructured, and the trained machine learning program 814 implements a deep neural network 828 that is able to perform both feature extraction and classification/clustering operations.

A neural network 828 generated during the training phase 802, and implemented within the trained machine learning program 814, may include a hierarchical (e.g., layered) organization of neurons. For example, neurons (or nodes) may be arranged hierarchically into a number of layers, including an input layer, an output layer, and multiple hidden layers. Each of the layers within the neural network 828 can have one or many neurons and each of these neurons operationally computes a small function (e.g., activation function). For example, if an activation function generates a result that transgresses a particular threshold, an output may be communicated from that neuron (e.g., transmitting neuron) to a connected neuron (e.g., receiving neuron) in successive layers. Connections between neurons also have associated weights, which defines the influence of the input from a transmitting neuron to a receiving neuron.

In some examples, the neural network 828 may also be one of a number of different types of neural networks, including a single-layer feed-forward network, an Artificial Neural Network (ANN), a Recurrent Neural Network (RNN), a symmetrically connected neural network, and unsupervised pre-trained network, a transformer network, a Convolutional Neural Network (CNN), or a Recursive Neural Network (RNN), merely for example.

During prediction phases 804, the trained machine learning program 814 is used to perform an assessment. Query data 812 is provided as an input to the trained machine learning program 814, and the trained machine learning program 814 generates the assessment 816 as output, responsive to receipt of the query data 812.

In some examples, the trained machine learning program 814 may comprise a generative AI model. Generative AI is a term that may refer to AI that can create new content. For example, generative AI can produce text, images, video, audio, code, or synthetic data.

Some of the techniques that may be used om, or together with, generative AI are:
- GANs: GANs may include two neural networks: a generator and a discriminator. The generator network attempts to create realistic content that can "fool" the discriminator network, while the discriminator network attempts to distinguish between real and fake content. The generator and discriminator networks compete with each other and improve over time.
- Variational autoencoders (VAEs): VAEs may encode input data into a latent space (e.g., a compressed representation) and then decode it back into output data. The latent space can be manipulated to generate new variations of the output data. VAEs may use self-attention mechanisms to process input data, allowing them to handle long text sequences and capture complex dependencies.
- Transformer models: Transformer models may use attention mechanisms to learn the relationships between different parts of input data (such as words or pixels) and generate output data based on these relationships. Transformer-based models can handle sequential data, such as text or speech, as well as non-sequential data, such as images or code. For example, language models (such as a Large Language Model (LLM) or a Small Language Model (SLM)) may be a transformer model, or may be based on a transformer model. Nonlimiting examples of LLMs that use transformer models include GPT-4 (Generative Pre-trained Transformer 4) developed by OpenAI^{™}, BERT (Bidirectional Encoder Representations from Transformers) developed by Google^{™}, LLaMA (Large Language Model Meta AI) developed by Meta^{™}, PaLM2 (Pathways Language Model 2) developed by Google^{™}, and Claude 3 developed by Anthropic^{™}.

In generative AI examples, the assessment 816 generated as a response or output by the trained machine learning program 814 may include predictions, translations, summaries, answers to questions, suggestions, media content, or combinations thereof. In some examples, a machine learning model may be fine-tuned. The term "fine-tuning," as used herein, generally refers to a process of adapting a pre-trained or "base" machine learning model. For example, a machine learning model may be adapted to improve its performance on a specific task or to make it more suitable for a specific operation. Fine-tuning techniques may include one or more of updating or changing a pre-trained model's internal parameters through additional training, injecting new trainable weights or layers into the model architecture and training on those weights or layers, modifying a model topology by altering layers or connections, changing aspects of the training process (such as loss functions or optimization methods), or any other adaptations that may, for example, result in better model performance on a particular task compared to the pre-trained model.

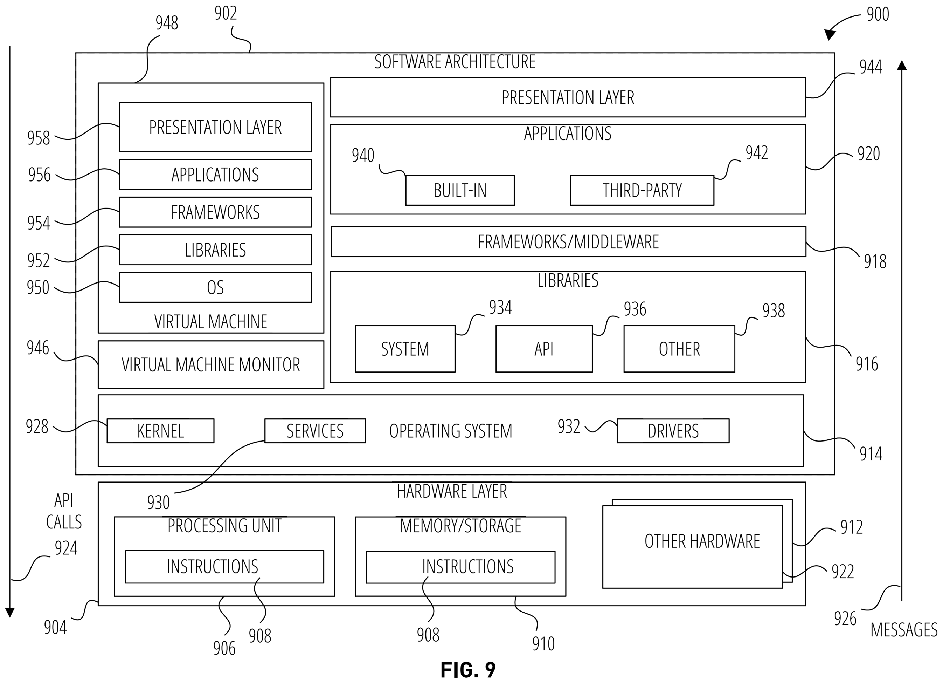

FIG. 9 is a block diagram 900 showing a software architecture 902 for a computing device, according to some examples. The software architecture 902 may be used in conjunction with various hardware architectures, for example, as described herein. FIG. 9 is merely a nonlimiting illustration of a software architecture, and many other architectures may be implemented to facilitate the functionality described herein. A representative hardware layer 904 is illustrated and can represent, for example, any of the above referenced computing devices. In some examples, the hardware layer 904 may be implemented according to the architecture of the computer system of FIG. 10.

The representative hardware layer 904 comprises one or more processing units 906 having associated executable instructions 908. Executable instructions 908 represent the executable instructions of the software architecture 902, including implementation of the methods, modules, subsystems, and components, and so forth described herein and may also include memory and/or storage modules 910, which also have executable instructions 908. Hardware layer 904 may also comprise other hardware as indicated by other hardware 912 and other hardware 922 which represent any other hardware of the hardware layer 904, such as the other hardware illustrated as part of the software architecture 902.

In the architecture of FIG. 9, the software architecture 902 may be conceptualized as a stack of layers where each layer provides particular functionality. For example, the software architecture 902 may include layers such as an operating system 914, libraries 916, frameworks/middleware layer 918, applications 920, and presentation layer 944. Operationally, the applications 920 or other components within the layers may invoke API calls 924 through the software stack and access a response, returned values, and so forth illustrated as messages 926 in response to the API calls 924. The layers illustrated are representative in nature and not all software architectures have all layers. For example, some mobile or special purpose operating systems may not provide a frameworks/middleware layer 918, while others may provide such a layer. Other software architectures may include additional or different layers.

The operating system 914 may manage hardware resources and provide common services. The operating system 914 may include, for example, a kernel 928, services 930, and drivers 932. The kernel 928 may act as an abstraction layer between the hardware and the other software layers. For example, the kernel 928 may be responsible for memory management, processor management (e.g., scheduling), component management, networking, security settings, and so on. The services 930 may provide other common services for the other software layers. In some examples, the services 930 include an interrupt service. The interrupt service may detect the receipt of an interrupt and, in response, cause the software architecture 902 to pause its current processing and execute an interrupt service routine (ISR) when an interrupt is accessed.

The drivers 932 may be responsible for controlling or interfacing with the underlying hardware. For instance, the drivers 932 may include display drivers, camera drivers, Bluetooth^{®} drivers, flash memory drivers, serial communication drivers (e.g., Universal Serial Bus (USB) drivers), Wi-Fi^{®} drivers, near-field communication (NFC) drivers, audio drivers, power management drivers, and so forth depending on the hardware configuration.

The libraries 916 may provide a common infrastructure that may be utilized by the applications 920 or other components or layers. The libraries 916 typically provide functionality that allows other software modules to perform tasks in an easier fashion than to interface directly with the underlying operating system 914 functionality (e.g., kernel 928, services 930 or drivers 932). The libraries 916 may include system libraries 934 (e.g., C standard library) that may provide functions such as memory allocation functions, string manipulation functions, mathematical functions, and the like. In addition, the libraries 916 may include API libraries 936 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 916 may also include a wide variety of other libraries 938 to provide many other APIs to the applications 920 and other software components/modules.

The frameworks/middleware layer 918 may provide a higher-level common infrastructure that may be utilized by the applications 920 or other software components/modules. For example, the frameworks/middleware layer 918 may provide various graphic user interface (GUI) functions, high-level resource management, high-level location services, and so forth. The frameworks/middleware layer 918 may provide a broad spectrum of other APIs that may be utilized by the applications 920 or other software components/modules, some of which may be specific to a particular operating system or platform.

The applications 920 include built-in applications 940 or third-party applications 942. Examples of representative built-in applications 940 may include, but are not limited to, a contacts application, a browser application, a book reader application, a location application, a media application, a messaging application, or a game application. Third-party applications 942 may include any of the built-in applications as well as a broad assortment of other applications. In a specific example, the third-party application 942 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 942 may invoke the API calls 924 provided by the mobile operating system such as operating system 914 to facilitate functionality described herein.

The applications 920 may utilize built in operating system functions (e.g., kernel 928, services 930 or drivers 932), libraries (e.g., system libraries 934, API libraries 936, and other libraries 938), and frameworks/middleware layer 918 to create user interfaces to interact with users of the system. Alternatively, or additionally, in some systems, interactions with a user may occur through a presentation layer, such as presentation layer 944. In these systems, the application/module "logic" can be separated from the aspects of the application/module that interact with a user.

Some software architectures utilize virtual machines. In the example of FIG. 9, this is illustrated by virtual machine 948. A virtual machine creates a software environment where applications/modules can execute as if they were executing on a hardware computing device. A virtual machine is hosted by a host operating system (operating system 914) and typically, although not always, has a virtual machine monitor 946, which manages the operation of the virtual machine as well as the interface with the host operating system (e.g., operating system 914). A software architecture executes within the virtual machine 948 such as an operating system 950, libraries 952, frameworks/middleware 954, applications 956 or presentation layer 958. These layers of software architecture executing within the virtual machine 948 can be the same as corresponding layers previously described or may be different.

Certain examples are described herein as including logic or a number of components, modules, or mechanisms. Modules or components may constitute either software modules/components (e.g., code embodied (1) on a non-transitory machine-readable medium or (2) in a transmission signal) or hardware-implemented modules/components. A hardware-implemented module/component is a tangible unit capable of performing certain operations and may be configured or arranged in a certain manner. In examples, one or more computer systems (e.g., a standalone, client, or server computer system) or one or more hardware processors may be configured by software (e.g., an application or application portion) as a hardware-implemented module/component that operates to perform certain operations as described herein.

In various examples, a hardware-implemented module/component may be implemented mechanically or electronically. For example, a hardware-implemented module/component may comprise dedicated circuitry or logic that is permanently configured (e.g., as a special-purpose processor, such as a field programmable gate array (FPGA) or an application-specific integrated circuit (ASIC)) to perform certain operations. A hardware-implemented module/component may also comprise programmable logic or circuitry (e.g., as encompassed within a general-purpose processor or another programmable processor) that is temporarily configured by software to perform certain operations.

Accordingly, the term "hardware-implemented module" or "hardware-implemented component" should be understood to encompass a tangible entity, be that an entity that is physically constructed, permanently configured (e.g., hardwired), or temporarily or transitorily configured (e.g., programmed) to operate in a certain manner or to perform certain operations described herein. Considering examples in which hardware-implemented modules/components are temporarily configured (e.g., programmed), each of the hardware-implemented modules/components need not be configured or instantiated at any one instance in time. For example, where the hardware-implemented modules/components comprise, a general-purpose processor configured using software, the general-purpose processor may be configured as respective different hardware-implemented modules/components at different times. Software may accordingly configure a processor, for example, to constitute a particular hardware-implemented module/component at one instance of time and to constitute a different hardware-implemented module/component at a different instance of time.

Hardware-implemented modules/components can provide information to, and receive information from, other hardware-implemented modules/components. Accordingly, the described hardware-implemented modules/components may be regarded as being communicatively coupled. Where multiple of such hardware-implemented modules/components exist contemporaneously, communications may be achieved through signal transmission (e.g., over appropriate circuits and buses that connect the hardware-implemented modules/components). In examples in which multiple hardware-implemented modules/components are configured or instantiated at different times, communications between such hardware-implemented modules/components may be achieved, for example, through the storage and retrieval of information in memory structures to which the multiple hardware-implemented modules/components have access. For example, one hardware-implemented module/component may perform an operation, and store the output of that operation in a memory device to which it is communicatively coupled. A further hardware-implemented module/component may then, at a later time, access the memory device to retrieve and process the stored output.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules/components that operate to perform one or more operations or functions. The modules/components referred to herein may, in some examples, comprise processor-implemented modules/components.

Similarly, the methods described herein may be at least partially processor-implemented. For example, at least some of the operations of a method may be performed by one or more processors or processor-implemented modules/components. The performance of certain of the operations may be distributed among the one or more processors, not only residing within a single machine, but deployed across a number of machines.

The one or more processors may also operate to support performance of the relevant operations in a "cloud computing" environment or as a "software as a service (SaaS)." For example, at least some of the operations may be performed by a group of computers (as examples of machines including processors), these operations being accessible via a network (e.g., the Internet) and via one or more appropriate interfaces (e.g., APIs).

Examples may be implemented in digital electronic circuitry, or in computer hardware, firmware, or software, or in combinations of them. Examples may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

FIG. 10 is a block diagram of a machine in the example form of a computer system 1000 within which instructions 1024 may be executed for causing the machine to perform any one or more of the methodologies discussed herein. In alternative examples, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1000 includes a processor 1002 (e.g., a central processing unit (CPU), a GPU, or both), a primary or main memory 1004, and a static memory 1006, which communicate with each other via a bus 1008. The computer system 1000 may further include a video display unit 1010 (e.g., a liquid crystal display (LCD) or a cathode ray tube (CRT)). The computer system 1000 also includes an alphanumeric input device 1012 (e.g., a keyboard or a touch-sensitive display screen), a UI navigation (or cursor control) device 1014 (e.g., a mouse), a storage unit 1016, a signal generation device 1018 (e.g., a speaker), and a network interface device 1020.

As used herein, the term "processor" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

The storage unit 1016 includes a machine-readable medium 1022 on which is stored one or more sets of data structures and instructions 1024 (e.g., software) embodying or utilized by any one or more of the methodologies or functions described herein. The instructions 1024 may also reside, completely or at least partially, within the main memory 1004 or within the processor 1002 during execution thereof by the computer system 1000, with the main memory 1004 and the processor 1002 also each constituting a machine-readable medium 1022.

While the machine-readable medium 1022 is shown in accordance with some examples to be a single medium, the term "machine-readable medium" may include a single medium or multiple media (e.g., a centralized or distributed database, or associated caches and servers) that store the one or more instructions 1024 or data structures. The term "machine-readable medium" shall also be taken to include any tangible medium that is capable of storing, encoding, or carrying instructions 1024 for execution by the machine and that cause the machine to perform any one or more of the methodologies of the present disclosure, or that is capable of storing, encoding, or carrying data structures utilized by or associated with such instructions 1024. The term "machine-readable medium" shall accordingly be taken to include, but not be limited to, solid-state memories, and optical and magnetic media. Specific examples of a machine-readable medium 1022 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magnetooptical disks; and compact disc read-only memory (CD-ROM) and digital versatile disc read-only memory (DVD-ROM) disks. A machine-readable medium is not a transmission medium.

The instructions 1024 may further be transmitted or received over a communications network 1026 using a transmission medium. The instructions 1024 may be transmitted using the network interface device 1020 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., Wi-Fi and Wi-Max networks). The term "transmission medium" shall be taken to include any intangible medium that is capable of storing, encoding, or carrying instructions 1024 for execution by the machine, and includes digital or analog communications signals or other intangible media to facilitate communication of such software.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein. Other examples may be utilized and derived therefrom, such that structural and logical substitutions and changes may be made without departing from the scope of this disclosure. This detailed description, therefore, is not to be taken in a limiting sense, and the scope of various examples is defined only by the appended claims, along with the full range of equivalents to which such claims are entitled.

Such examples of the subject matter may be referred to herein, individually or collectively, by the term "example" merely for convenience and without intending to voluntarily limit the scope of this application to any single example or concept if more than one is in fact disclosed. Thus, although specific examples have been illustrated and described herein, it should be appreciated that any arrangement calculated to achieve the same purpose may be substituted for the specific examples shown. This disclosure is intended to cover any and all adaptations or variations of various examples. Combinations of the above examples, and other examples not specifically described herein, will be apparent to those of skill in the art upon reviewing the above description.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance.

Unless the context clearly requires otherwise, throughout the description and the claims, the words "comprise," "comprising," and the like are to be construed in an inclusive sense, as opposed to an exclusive or exhaustive sense, e.g., in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words using the singular or plural number may also include the plural or singular number, respectively. Except as otherwise indicated, the word "or" in reference to a list of two or more items, covers all of the following interpretations of the word: any one of the items in the list, all of the items in the list, and any combination of the items in the list.

Although some examples, such as those depicted in the drawings, include a particular sequence of operations, the sequence may be altered without departing from the scope of the present disclosure. For example, some of the operations depicted may be performed in parallel or in a different sequence that does not materially affect the functions as described in the examples. In other examples, different components of an example device or system that implements an example method may perform functions at substantially the same time or in a specific sequence. The term "operation" is used to refer to elements in the drawings of this disclosure for ease of reference and it will be appreciated that each "operation" may identify one or more operations, processes, actions, or steps, and may be performed by one or multiple components.

## Claims

1. A computer-implemented method performed by a computer system comprising memory and at least one hardware processor, the computer-implemented method comprising:
training a plurality of software agents using historical process data, each software agent of the plurality of software agents representing a single task in a process;
simulating the process to generate simulation results by executing a multi-agent system in which the plurality of software agents are configured according to a candidate process model for the process and operate autonomously based on the training;
executing the process using a runtime configuration that is based on the candidate process model to generate runtime results for comparison with the simulation results;
adjusting the candidate process model based on the comparison;
repeating the simulating of the process using an adjusted multi-agent system corresponding to the adjusted candidate process model;
repeating the executing of the process using an adjusted runtime configuration corresponding to the adjusted candidate process model; and
generating a deployment process model for the process based on the adjusted candidate process model.

2. The computer-implemented method of claim 1, wherein a software agent of the plurality of software agents comprises a machine learning model, and the training of the software agent comprises:
training the machine learning model on at least a subset of the historical process data related to the single task that the software agent represents.

3. The computer-implemented method of claim 2, wherein the machine learning model comprises a fine-tuned language model, and the training of the software agent further comprises:
accessing a pre-trained language model;
generating the fine-tuned language model by fine-tuning the pre-trained language model on the historical process data related to the single task; and
generating a one-to-one mapping between the fine-tuned language model and the single task that the software agent represents.

4. The computer-implemented method of any of claims 2 to 3, wherein each software agent of the plurality of software agents comprises a respective machine learning model that is trained on a respective subset of the historical process data related to a respective single task.

5. The computer-implemented method of any of claims 1 to 4, further comprising:
generating, for each software agent of the plurality of software agents, a one-to-one mapping between the software agent and the single task that the software agent represents, such that the plurality of software agents corresponds to a plurality of tasks defined by the candidate process model.

6. The computer-implemented method of any of claims 1 to 5, wherein the simulating of the process comprises executing a test simulation to test the candidate process model, and the training of the plurality of software agents further comprises:
executing a baseline simulation using the plurality of software agents to generate baseline results for a baseline process model associated with the historical process data; and
performing at least one of adjusting or retraining of at least a subset of the plurality of software agents based on the baseline results and the historical process data.

7. The computer-implemented method of any of claims 1 to 6, wherein the simulating of the process comprises executing a test simulation to test the candidate process model, the computer-implemented method further comprising:
executing a baseline simulation using the plurality of software agents to generate baseline results for a baseline process model associated with the historical process data;
generating first performance data by comparing the baseline results with the simulation results;
automatically triggering, based on the first performance data, generation of the runtime configuration for the executing of the process; and
generating second performance data by comparing the runtime results with the simulation results to enable the adjusting of the candidate process model.

8. The computer-implemented method of any of claims 1 to 7, further comprising:
generating the runtime configuration by automatically configuring Robotic Process Automation (RPA) bots for the executing of the process, wherein the process is automatically executed by the RPA bots to generate the runtime results;
and/or
automatically triggering, based on the comparison, retraining of at least a subset of the plurality of software agents; and
automatically repeating the simulating of the process after the retraining of at least the subset of the plurality of software agents.

9. The computer-implemented method of any of claims 1 to 8, wherein the simulating of the process comprises automatically executing the multi-agent system until the multi-agent system reaches equilibrium, and the simulation results are generated after the multi-agent system reaches equilibrium, and optionally
wherein the simulating of the process comprises automatically introducing errors into the process prior to the generating of the simulation results.

10. The computer-implemented method of any of claims 1 to 9, further comprising:
automatically repeating the adjustment of the candidate process model, the simulating of the process, and the executing of the process until detecting that the simulation results meet at least one predetermined condition with respect to the runtime results; and
in response to detecting that the simulation results meet the at least one predetermined condition with respect to the runtime results, triggering the generating of the deployment process model for deploying the process;
and/or
determining, based on one or more predetermined performance indicators, that the simulation results for the adjusted candidate process model correspond to the runtime results for the adjusted candidate process model; and
in response to determining that the simulation results for the adjusted candidate process model correspond to the runtime results for the adjusted candidate process model, triggering the generating of the deployment process model for deploying the process.

11. The computer-implemented method of any of claims 1 to 10, wherein trained behavior of each software agent of the plurality of software agents is defined by parameters that control behavior of the software agent.

12. A system comprising:
at least one memory that stores instructions; and
one or more processors configured by the instructions to perform operations comprising:
training a plurality of software agents using historical process data, each software agent of the plurality of software agents representing a single task in a process;
simulating the process to generate simulation results by executing a multi-agent system in which the plurality of software agents are configured according to a candidate process model for the process and operate autonomously based on the training;
executing the process using a runtime configuration that is based on the candidate process model to generate runtime results for comparison with the simulation results;
adjusting the candidate process model based on the comparison;
repeating the simulating of the process using an adjusted multi-agent system corresponding to the adjusted candidate process model;
repeating the executing of the process using an adjusted runtime configuration corresponding to the adjusted candidate process model; and
generating a deployment process model for the process based on the adjusted candidate process model.

13. The system of claim 12, further performing operations according to the method of any of claims 2 to 11.

14. One or more non-transitory computer-readable media storing computer-executable instructions that, when executed by a computing system, cause the computing system to perform operations comprising:
training a plurality of software agents using historical process data, each software agent of the plurality of software agents representing a single task in a process;
simulating the process to generate simulation results by executing a multi-agent system in which the plurality of software agents are configured according to a candidate process model for the process and operate autonomously based on the training;
executing the process using a runtime configuration that is based on the candidate process model to generate runtime results for comparison with the simulation results;
adjusting the candidate process model based on the comparison;
repeating the simulating of the process using an adjusted multi-agent system corresponding to the adjusted candidate process model;
repeating the executing of the process using an adjusted runtime configuration corresponding to the adjusted candidate process model; and
generating a deployment process model for the process based on the adjusted candidate process model.

15. The one or more non-transitory computer-readable media of claim 14, further comprising computer executable instructions that cause the computing system to perform the method of any one of claims 2 to 11.
